# EUROPÄISCHE PATENTSCHRIFT

(11) **EP 1 064 779 B1**
(45) Veröffentlichungstag und Bekanntmachung des Hinweises auf die Patenterteilung: **28.08.2002**
(21) Anmeldenummer: 99908665.5
(22) Anmeldetag: 16.03.1999
(51) Int. Cl.: H04N 1/401, H04N 1/407

(54) **LESEEINHEIT FÜR EIN DOKUMENT**
READING UNIT FOR A DOCUMENT
UNITE DE LECTURE POUR UN DOCUMENT

(30) Priorität: 17.03.1998 AT 46698
(43) Veröffentlichungstag der Anmeldung: 03.01.2001
(73) Patentinhaber: KEBA AG, 4041 Linz (AT)
(72) Erfinder: ZECHLEITNER, Dieter, (AT)
(74) Vertreter: Secklehner, Günter, Dr.
(86) Internationale Anmeldenummer: AT9900065
(87) Internationale Veröffentlichungsnummer: WO99048278

(56) Entgegenhaltungen:
- EP-A- 0 613 291
- EP-A- 0 658 503
- EP-A- 0 689 341
- EP-A- 0 715 449
- WO-A-97/02698
- US-A- 4 295 167
- US-A- 4 491 961
- US-A- 5 157 518
- US-A- 5 325 217
- US-A- 5 442 465
- US-A- 5 710 637
- PATENT ABSTRACTS OF JAPAN vol. 012, no. 396 (P-774), 21. Oktober 1988 -& JP 63 136293 A (OKI ELECTRIC IND CO LTD), 8. Juni 1988
- PATENT ABSTRACTS OF JAPAN vol. 017, no. 264 (E-1370), 24. Mai 1993 -& JP 05 007296 A (SONY CORP), 14. Januar 1993
- PATENT ABSTRACTS OF JAPAN vol. 010, no. 370 (E-463), 10. Dezember 1986 & JP 61 166266 A (FUJITSU LTD), 26. Juli 1986
- PATENT ABSTRACTS OF JAPAN vol. 010, no. 137 (E-405), 21. Mai 1986 & JP 61 001167 A (MATSUSHITA DENSOU KK), 7. Januar 1986

## Beschreibung

Die Erfindung betrifft eine Leseeinheit für ein Dokument, mit einer Steuer- und/oder Auswertevorrichtung und mit einer Scannervorrichtung zum Lesen des Dokumentes, mit einer Führungsvorrichtung für das Dokument und mit einer Transportvorrichtung für die Relativverstellung zwischen Dokument und Scannervorrichtung, wobei die Steuer- und/oder Auswertevorrichtung eine Ausgleichsvorrichtung mit Korrekturwerten für die Korrektur der von einem optoelektrischen Wandler der Scannervorrichtung abgehenden Bildsignale in Echtzeit aufweist und die für den optoelektronischen Wandler jeweils individuellen Korrekturwerte zumindest durch Vergleich von Sollwerten eines Referenzdokumentes mit den vom optoelektrischen Wandler abgegebenen Istwerten der Bildsignale des Referenzdokumentes ermittelt und in einer ersten Speichervorrichtung dauerhaft hinterlegt sind.

Es sind bereits verschiedene Leseeinheiten zur optoelektrischen Abtastung von Dokumenten, insbesondere von Schriftstücken und Einzelblättern mit graphischen Darstellungen bekannt. Diese Leseeinheiten bzw. üblicherweise als Scanner bezeichneten Vorrichtungen werden vielfach in privaten bzw. innerbetrieblichen Bereichen eingesetzt und werden von Benutzern mit entsprechenden Fachkenntnissen bzw. von zuvor eingeschulten Benutzern bedient. Bei diesen bekannten Scannervorrichtungen ist das berührungslos abzutastende Dokument entsprechend positioniert auf einer transparenten Platte aufzulegen. Durch den manuellen Start des Scannvorgangs durch den Benutzer wird das Abtastorgan bei gleichzeitiger Lichtabstrahlung relativ zum ortsfesten Dokument bewegt und die Hell- und Dunkelbereiche des Dokumentes erfaßt. Nachteilig ist bei diesen bekannten Vorrichtungen, daß die erzielbaren Leistungen stark begrenzt sind.

Aus der WO 97/02698 A1 ist eine optoelektronische Leseeinheit bzw. ein Scanner für Dokumente, umfassend eine Anordnung mehrerer optoelektronischer Sensoren und mehrere Lichtquellen in Form von Leuchtdioden, bekannt. Diese Komponenten bilden eine optoelektronische Bilderfassungsvorrichtung, welche mit der Scannerelektronik zur Koordinierung des optischen Abtastverfahrens verbunden ist. Die entsprechende Scannerelektronik umfaßt auch eine Korrekturschaltung, mit welcher die von der optoelektronischen Abtastvorrichtung gelieferten Bildsignale korrigiert bzw. angepaßt werden können. Die hierfür verwendeten Korrekturdaten sind dabei in einer Speichervorrichtung der Scannerelektronik abgelegt und sind von dem die Korrekturen vornehmenden Bauelement auslesbar. Bei einem Tausch der optoelektronischen Abtastvorrichtung kann es passieren, daß der Speicher mit den Korrektur- bzw. Anpaßungsdaten nicht ersetzt bzw. aktualisert wird und somit unzutreffende Korrekturdaten zum Einsatz kommen. In einem derartigen Fall werden die erfaßten Bilddaten fortlaufend sogar noch mehr verfälscht.

In der EP 0 689 341 A2 ist ebenso ein Scanner mit Korrekturfunktion für die erfaßten Bilddaten beschrieben. Insbesondere ist ein Ausgleich der Differenzen der Bildsignale, welche bei einem Scannvorgang über das sogenannte Flachbett des Scannes erfaßt werden, gegenüber jenen Bildsignalen, welche beim Scannvorgang mittels dem Dokumenteneinzug ermittelt werden, vorgesehen. Diese Korrekturschaltung umfaßt ebenso eine Speichervorrichtung, insbesondere einen nicht flüchtigen Speicher in Form eines sogenannten EEPROM in welchem die entsprechenden Korrekturwerte zum Abgleichen der jeweiligen Bilddaten hinterlegt sind. Diese Speichervorrichtung für die Korrekturdaten ist Teil der Scannerelektronik und wird zum Abgleichen der Bildsignale von der Korrekturschaltung, insbesondere von einem Mikroprozessor direkt auf die entsprechend angeschlossene Speichervorrichtung mit den Korrekturdaten zugegriffen. Auch bei dieser Ausgestaltung kann es vorkommen, daß Korrekturdaten zum Einsatz kommen, welche nicht auf die jeweilige optoelektronische Abtastvorrichtung abgestimmt sind.

Die US 4,491,961 A beschreibt ebenso eine Korrekturschaltung für die Abtastsignale einer optoelektronischen Abtastvorrichtung. Hierbei werden die von der optoelektronischen Abtastvorrichtung erfaßten Bilddaten in digitaler Form an eine Korrekturschaltung weitergeleitet, welche entsprechend den vordefinierten Korrekturwerten eine Veränderung der vom Scannerkopf empfangenen Bilddaten vornimmt. Die Speichervorrichtungen mit den Korrektur- bzw. Anpassungsdaten sind dabei direkt der Korrektur- bzw. Ausgleichsschaltung zugeordnet. Auch hierbei kann nicht ausgeschlossen werden, daß in Hinblick auf die installierte optoelektronische Abtastvorrichtung unpassende Korrekturdaten zum Einsatz kommen.

Der vorliegenden Erfindung liegt die Aufgabe zugrunde, eine Leseeinheit zu schaffen, die störungssicher arbeitet und damit eine hohe Leistungsfähigkeit besitzt.

Diese Aufgabe der Erfindung wird dadurch gelöst, daß die erste Speichervorrichtung für die Korrekturwerte direkt an einem Scannerkopf der Scannervorrichtung und/oder am optoelektrischen Wandler angeordnet ist und mit diesem ein einstückiges Bauteil mit vordefinierten Schnittstellen zu den peripheren, elektronischen Komponenten, insbesondere zu einer Scannerelektronik bildet und die Steuer- und/oder Auswertevorrichtung zumindest bei jeder Hochlaufphase zur Übertragung der Korrekturdaten von der ersten nicht flüchtigen Speichervorrichtung in eine weitere Speichervorrichtung der Steuer- und/oder Auswertevorrichtung ausgebildet ist und diese weitere Speichervorrichtung eine im Vergleich zur ersten Speichervorrichtung raschere Zugriffsmöglichkeit und höhere Datenübertragungsrate aufweist.

Der Vorteil dieser Ausbildung liegt darin, daß optimale Abtastergebnisse hinsichtlich Qualität und Vorlagentreue erreicht werden, ohne daß dadurch die Verarbeitungsgeschwindigkeit der einzulesenden Dokumente beeinträchtigt ist. Insbesondere können mit dieser Ausgleichsvorrichtung die der gesamten Leseeinheit innewohnenden Toleranzen, die von den mechanischen als auch von den elektrischen und optoelektrischen Komponenten ausgehen größtmöglich annulliert werden. Somit ist eine absolut vorlagengetreue Bilddatenerfassung erreicht, wodurch die Grundlage für eine sichere Auswertung der Bildinformationen gesichert ist. Dieser Ausgleich bzw. diese Kompensation sämtlicher Bauteiltoleranzen der Leseeinheit, die z.B. durch die Transportvorrichtung, den optoelektrischen Wandler und/oder auch durch die Beleuchtung für das Dokument naturgemäß auftreten, erfolgt dabei nicht zu Lasten der Abtastgeschwindigkeit bzw. nicht zu Lasten der Erfassungszeitdauer der Bilddaten, da der Abgleich der Bilddaten rein hardwaremäßig in Echtzeit erfolgt. D.h., die von der Scannervorrichtung abgegebenen, toleranzbehafteten Bilddaten werden unmittelbar über eine Ausgleichshardware abgeglichen und bereitgestellt. Die von der Scannervorrichtung abgegebenen, elektrischen Bildsignale durchlaufen also verzögerungsfrei die rein hardwaremäßig aufgebaute Ausgleichsvorrichtung, in welcher die aufsummierten Toleranzen aufgehoben werden. Bei jeder Leseeinheit treten aufgrund der Vielzahl der zusammenwirkenden Komponenten stets unterschiedliche Toleranzen auf und sind diesen individuellen Toleranzen konkret abgestimmte Korrekturwerte für den Ausgleich dieser Toleranzen zugeordnet, sodaß optimale Ergebnisse erzielbar sind. Darüber hinaus werden die dauerhaft gespeicherten Korrekturdaten in eine weitere Speichervorrichtung mit vergleichsweise höherer Zugriffsperformance geschrieben, sodaß vergleichsweise hohe Verarbeitungsgeschwindigkeiten erzielt werden können. Weiters wird erreicht, daß bei einem Tausch der Scannervorrichtung mit dem optoelektrischen Wandler niemals unpassende Korrekturdaten zum Einsatz kommen, da die Speichereinheit für die Korrekturwerte ein komplett auszutauschendes Modul der Leseeinheit bildet.

Vorteilhaft ist weiters eine Ausbildung nach Anspruch 2, da dadurch Rechen- und somit zeitintensive Korrekturmaßnahmen erübrigt sind.

Vorteilhaft ist auch eine Ausbildung nach einem oder mehreren der Ansprüche 3 bis 5, da dadurch ein überaus störsicherer und funktionsstabiler Aufbau erzielt ist.

Von Vorteil ist aber auch eine Weiterbildung nach einem oder mehreren der Ansprüche 6 bis 10, da dadurch die abgeglichenen Bilddaten problemlos an periphere Datenverarbeitungsvorrichtungen zur weiteren Verarbeitung und/oder Auswertung weitergeleitet werden können.

Von Vorteil ist weiters eine Ausbildung nach Anspruch 11, da dadurch fixe bzw. stets gleichbleibende Abläufe in der Leseeinheit und vergleichsweise zeitintensive, von den Systemzuständen abhängige Entscheidungsaufgaben bzw. Vergleichsoperationen aufgeteilt werden und somit kurze Durchlaufzeiten erreicht werden. Die insbesondere rein hardwaremäßige Ablaufkontrollvorrichtung, die insbesondere in Art einer "Statemachine" ausgebildet ist, übernimmt dabei die stets gleichbleibenden Abläufe und die systembedingten Abläufe werden von zumindest einem Mikroprozessor kontrolliert bzw. bestimmt.

Von Vorteil ist auch eine Ausbildung nach einem oder mehreren der Ansprüche 12 bis 14, da dadurch allgemein gültige und weit verbreitete Kommunikationsschnittstellen eingesetzt sind, die eine hohe Zuverlässigkeit aufweisen.

Von Vorteil ist aber auch eine Weiterbildung nach Anspruch 15 oder 16, da dadurch ein wartungs- bzw. servicegünstiger Aufbau gegeben ist und andererseits eine lückenlose Abtastung des Dokumentes ermöglicht ist.

Durch die Ausgestaltung nach Anspruch 17 wird eine robuste Scannervorrichtung erzielt, die ein problemloses Handling ermöglicht und dabei vorgenommene, hochgenaue Justierarbeiten am Scannerkopf nicht beeinträchtigt werden können.

Von Vorteil ist aber auch eine Ausführungsform nach Anspruch 18, da dadurch Lichtreflektionen bzw. Schattenbildungen, die durch eine rauhe Papieroberfläche bedingt sein können, gesichert vermieden sind.

Vorteilhaft ist aber auch eine Ausbildung nach einem oder mehreren der Ansprüche 19 bis 21, da dadurch eine hochpräzise Abtastung der auf den Beleg enthaltenen Enddarstellungen gegeben ist, die eine deutliche Unterscheidbarkeit, z.B. von Schriftzeichen ermöglichen. Darüberhinaus wird durch die Auswertung des refraktierten Lichtes, das keinerlei Lichtspiegelungen enthält, eine vorlagengetreue bzw. hochgenaue, optische Abtastung ohne optische Bildverfälschungen erzielt.

Gemäß einer Ausbildung nach den Ansprüchen 22 oder 23 können qualitativ hohe Abtastergebnisse konstant über einen relativ langen Zeitraum erreicht werden.

Weitere vorteilhafte Maßnahmen zur originalgetreuen bzw. verfälschungsfreien Abtastung des Dokumentes sind in den Ansprüchen 24 bis 26 beschrieben.

Von Vorteil ist aber auch eine Weiterbildung nach einem oder mehreren der Ansprüche 27 bis 29, da dadurch ein reibungsloser Einlauf des abzutastenden Dokumentes in den Scannerbereich ermöglicht ist und trotzdem auch bei geringfügig variierenden Dicken des Dokumentes ein optimaler Kontakt zwischen dem Scannerkopf und dem Dokument, welcher für eine hochpräzise unverfälschte Abtastung erforderlich ist, sichergestellt ist.

Durch die Ausbildung nach Anspruch 30 wird ein selbsttätiger Vortrieb des Beleges innerhalb des gesamten, vorgesehenen Förderweges innerhalb der Leseeinheit erzielt.

Durch die vorteilhafte Weiterbildung nach Anspruch 31 und/oder 32 wird in einfacher Art und Weise eine einheitliche Bilddatenerfassung ermöglicht, und für den Benutzer der Leseeinheit ist eine vom Bediener der Leseeinheit vielfach unzufriedenstellend ausgeführte Ausrichtung des Beleges erübrigt. Darüberhinaus ist dadurch für den Bediener der Leseeinheit ein deutlicher Komfortgewinn und eine problemlosere Zufuhr der Dokumente ermöglicht.

Von Vorteil ist weiters eine Ausbildung nach Anspruch 33, da dadurch die gleichzeitig zu erfassende Informationsmenge reduziert werden kann.

Von Vorteil ist auch eine Weiterbildung nach Anspruch 34 und/oder 35, da dadurch für den Besitzer der Dokumente bzw. für den Bediener der Leseeinheit relevante Informationen dauerhaft auf dem verarbeiteten Dokument angebracht werden können. Diese Informationen werden bevorzugt im Klartext aufgebracht und können als Nachweis der Bearbeitung bzw. als Bestätigung der vorgenommenen Auswahl dienen.

Schließlich ist auch eine Ausführung nach Anspruch 36 von Vorteil, da dadurch die Leseeinheit, insbesondere von allgemeinen Benutzern bedient werden kann. Unabhängig davon kann die Leseeinheit auch in öffentlich zugänglichen bzw. von der Öffentlichkeit bedienbaren Vorrichtungen eingesetzt werden und weist dabei einen hohen Bedienkomfort bei hoher Funktions- und Störsicherheit auf.

Die Erfindung wird im nachfolgenden anhand der in den Zeichnungen dargestellten Ausführungsbeispiele näher erläutert.

Es zeigen:
- Fig. 1: einen prinzipiellen Aufbau der erfindungsgemäßen Leseeinheit anhand eines stark vereinfachten, schematisierten Prinzip- und Blockschaltbildes;
- Fig. 2: ein Blockschaltbild der wesentlichsten in der Leseeinheit eingesetzten elektrischen Komponenten zur Verdeutlichung des Zusammenwirkens und der Zusammenschaltung der einzelnen Baugruppen;
- Fig. 3: eine mögliche Ausbildung der Leseeinheit im Bereich der Scannervorrichtung in Draufsicht und stark vereinfachter, schematischer Darstellung;
- Fig. 4: eine weitere Ausbildungsvariante der in der Leseeinheit eingesetzten Elektronik zur direkten Bilddatenübertragung in einen Personal-Computer als Blockschaltbild in stark vereinfachter, schematischer Darstellung;
- Fig. 5: ein Ausschnitt aus der Leseeinheit im Scannerbereich in Seitenansicht und stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

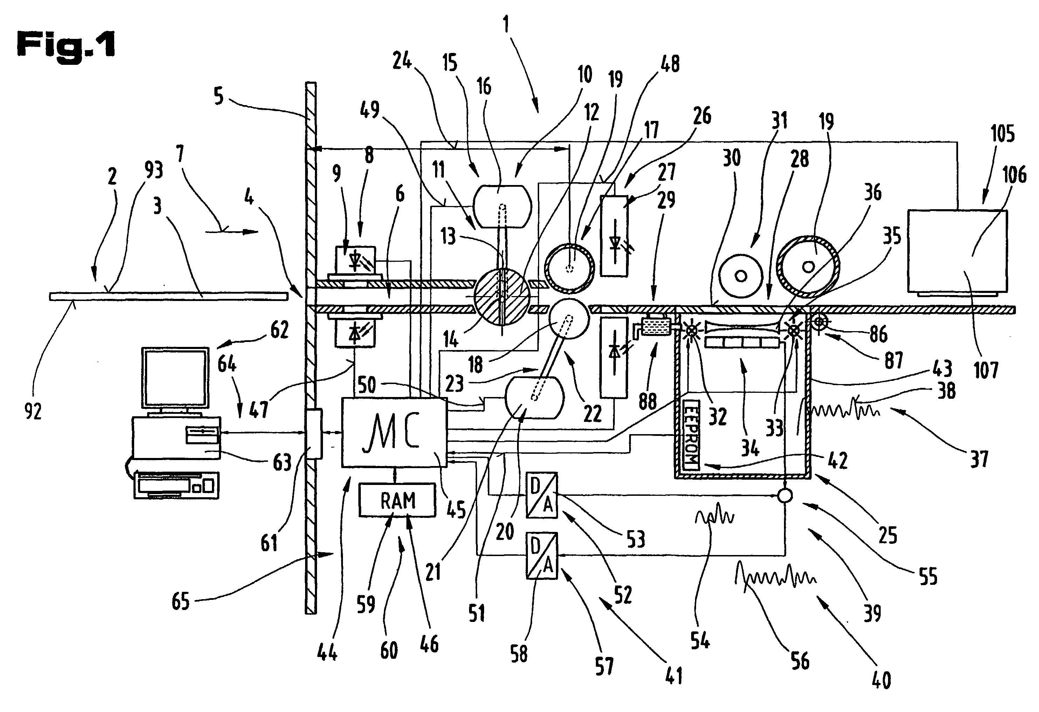

Fig. 1 zeigt ein stark vereinfachtes Blockschaltbild einer erfindungsgemäßen bzw. einer mit erfindungsgemäßen Komponenten ausgebildeten Leseeinheit 1 zur Erfassung optischer Abbildungen bzw. Zeichen auf Dokumenten 2 und zur Umwandlung derselben in elektrische Signale für die weitere elektronische Verarbeitung der erfaßten Bilddaten. Als Dokument 2 sind hierbei Belege 3, insbesondere Zahlscheine aus dem Bankwesen und Wettscheine oder Wettquittungen aus dem Lotteriewesen und auch sonstige Schriftstücke mit Schriftzeichen und sonstigen Zeichen und Markierungen auf einzelnen Blättern aus Papier zu verstehen.

Ein Beleg 3, insbesondere ein Zahl- oder Wettschein, welcher für eine entsprechende elektronische Verarbeitung der auf dem Beleg 3 enthaltenen Daten bzw. Informationen vorgesehen ist, kann von beliebigen Benutzern über eine Zuführöffnung 4, dessen Querschnittsabmessungen im wesentlichen den Querschnittsabmessungen des einzulesenden Beleges 3 entsprechen, der optoelektrischen Leseeinheit 1 zugeführt werden. Die Zuführöffnung 4 ist dabei bevorzugt in einem Gehäuseteil 5 eines Bank- bzw. Lotterieterminals vorgesehen. Der vom jeweiligen Bediener über die Zuführöffnung 4 manuell zugeführte Beleg 3 ist bezogen auf die Einsteckrichtung im Anschluß an die Zuführöffnung 4 und auch innerhalb der gesamten, nach außen hin abgeschlossenen und vor Zugriff geschützten Leseeinheit 1 über eine Führungsvorrichtung 6 auf dessen gesamten Transportweg innerhalb der Leseeinheit 1 geführt.

Die Führungsvorrichtung 6 kann hierzu Führungsleisten und Umlenkrollen bzw. Andrückrollen für den Beleg 3 umfassen, welche im wesentlichen den Transportweg und die Transportrichtung des Beleges 2 bestimmen.

Bezogen auf eine Zuführrichtung - Pfeil 7 - nach der Zuführöffnung 4 ist zumindest eine Detektionsvorrichtung 8 zur Erfassung von in die Zuführöffnung 4 eingesteckten Objekten angeordnet. Die Detektionsvorrichtung 8 ist bevorzugt durch zumindest eine Infrarotlichtschranke 9 gebildet, die die beabsichtige Zufuhr eines zu verarbeitenden Beleges 3 in Papierform zuverlässig erfaßt. Gegebenenfalls kann die Detektionsvorrichtung 8 auch durch mechanische Schaltelemente oder auch durch kapazitive Detektionselemente, bei welcher der Beleg 3 das Dielektrikum einer Kondensatorplattenanordnung darstellt bzw. eine Veränderung desselben bewirkt, gebildet sein.

In Förder- bzw. Zuführrichtung - Pfeil 7 - nach der Detektionsvorrichtung 8 ist eine Sperr- und Freigabevorrichtung 10 - insbesondere ein Shutter 11 - angeordnet, der die weitere Zufuhr bzw. ein tieferes Eindringen von Objekten in die Leseeinheit 1 ermöglicht bzw. verhindert.

Die Sperr- und Freigabevorrichtung 10 ist dabei direkt oder indirekt von der Detektionsvorrichtung 8 gesteuert und gibt in Abhängigkeit des Detektionsergebnisses der Detektionsvorrichtung 8 die Führungsvorrichtung 6 frei bzw. versperrt die Sperr- und Freigabevorrichtung 10 die Führungsvorrichtung 6, um das Eindringen des unzulässigen Objektes in die Leseeinheit 1 zu unterbinden.

Die Detektionsvorrichtung 8 ist insbesondere zur Erfassung von zugeführten Objekten ausgebildet, wobei lediglich bei gesicherter Detektierung von Objekten aus Papier mit typischen Kennwerten die Sperr- und Freigabevorrichtung 10, insbesondere der Shutter 11, für eine ungehinderte, weitere Zufuhr des Dokumentes 2 freigegeben ist. Die bevorzugt als Infrarotlichtschranke 9 ausgebildete Detektionsvorrichtung 8 liefert dabei insbesondere in Abhängigkeit der Durchlichtstärke, d.h. in Abhängigkeit der durch den Beleg 3 an dessen zweite Flachseite übertragenen Lichtstärke ein entsprechendes Signal bzw. bereits das Freigabe- oder Sperrsignal für den Shutter 11. Somit ist verhindert, daß ungeeignete Fremdobjekte, die möglicherweise aus vandalistischen Aktionen stammen und z.B. durch metallische Gegenstände bzw. Platten gebildet sind, in das Innere der Leseeinheit 1 gelangen können und dadurch eine Beschädigung oder ein mittelfristiger Ausfall der Leseeinheit 1 gesichert vermieden ist.

Die Sperr- und Freigabevorrichtung 10 ist dabei bevorzugt durch eine rotationssymmetrische Welle 12 mit bevorzugt kreisförmigem Querschnitt gebildet, die zumindest einen schlitzförmigen Durchbruch 13 aufweist, dessen Querschnittsabmessungen zumindest den Querschnittsabmessungen des Beleges 3 entsprechen.

Die Welle 12 erstreckt sich dabei quer über die Führungsvorrichtung 6 bzw. über die Führungsbahn für den Beleg 3 und ist um eine quer zur Förder- bzw. Zuführrichtung - Pfeil 7 - des Beleges 3 verlaufende Achse 14 drehbar gelagert. Der derart gelagerten Welle 12 ist eine Antriebsvorrichtung 15, insbesondere ein Elektromotor 16 zugeordnet, welcher bei elektrischer Beaufschlagung die Welle 12 in Drehbewegung versetzt. Die Antriebsvorrichtung 15 ist dabei derart ansteuerbar, daß der Durchbruch 13 mit der Führungsvorrichtung 6 fluchtet und so die Führungsbahn für den Beleg 3 im wesentlichen stufenlos fortsetzt. Weiters ist die Sperr- und Freigabevorrichtung 10 von der Antriebsvorrichtung 15 in Drehwinkelstellungen versetzbar, in welchen der Durchbruch 13 winkelig zur Ebene der Führungsvorrichtung 6 verläuft und daher die Führungsvorrichtung 6 für den Beleg 3 unterbricht bzw. absperrt, sodaß ein Einschieben des Beleges 3 in Förder- bzw. Zuführrichtung 7 - Pfeil 7 - über die Sperr- und Freigabevorrichtung 10 hinweg verhindert ist.

Selbstverständlich ist es anstelle dieser rotatorisch wirkenden Sperr- und Freigabevorrichtung 10 auch möglich, translatorisch wirkende Sperr- und Freigabevorrichtungen 10, wie z.B. plattenartige Schieber oder Sperrzapfen vorzusehen, welche die Führungsvorrichtung 6 sperren bzw. freigeben.

Sofern das Dokument 2 bzw. der Beleg von der Detektionsvorrichtung 8 als gültiges Objekt erkannt ist, ist die Sperr- und Freigabevorrichtung 10 in die Freigabestellung versetzt und der Bediener kann den Beleg 3 tiefer in die Leseeinheit 1 einschieben.

In Transport- bzw. Zuführrichtung - Pfeil 7 - des Beleges 3 nach der Sperr- und Freigabevorrichtung 10 ist zumindest eine elektromotorische Transportvorrichtung 17 für die weitere Beförderung bzw. den weiteren Transport des Beleges 3 innerhalb der Leseeinheit 1 angeordnet. Diese Transportvorrichtung 17 für die elektromotorische Beförderung des Beleges 3 innerhalb der Leseeinheit 1 kann dabei Antriebs- und/oder Transportrollen 18, 19 bzw. -walzen sowie Andrück-, Führungs- und/oder Gegendruckrollen bzw. -walzen umfassen. Darüber hinaus kann die Transportvorrichtung 17 Transportbänder bzw. Förderriemen umfassen, die einen reibungslosen Weitertransport des Beleges 3 gegebenenfalls auch über mehrere Umlenkungen innerhalb der Leseeinheit 1 garantieren. Bevorzugt weisen die Antriebsrollen 18 und/oder die Transportrollen 19 der Transportvorrichtung 17 zumindest an den mit dem Beleg 3 kontaktierenden Oberflächenbereichen einen hohen Reibungskoeffizienten in bezug auf den aus Papier bestehenden Beleg 3 auf, sodaß eine gute reibschlüssige Verbindung zwischen den Mantelbereichen der Antriebs- bzw. Transportrollen 18, 19 und dem Beleg 3 gegeben ist. Die Antriebs- und/oder Transportrollen 18, 19 können zur Erhöhung des Reibschlusses mit dem zu transportierenden Beleg 3 im Mantelbereich mit auf Papier gut haftenden Schichten, wie z.B. Gummi- oder Kunststoffschichten versehen sein, um relativ hohe Antriebskräfte auf den Beleg 3 übertragen zu können.

Sobald der Beleg 3 von den ersten Antriebs- bzw. Transportrollen 18, 19 der Transportvorrichtung 17 erfaßt ist, erfolgt der Weitertransport des Beleges 3 innerhalb der Leseeinheit 1 selbsttätig bzw. ohne der Möglichkeit einer Krafteinwirkung durch den Bediener der Leseeinheit 1. Die Antriebsrollen 18 der Transportvorrichtung 17 stehen dabei mit zumindest einer Antriebsvorrichtung 20, insbesondere mit zumindest einem Elektromotor 21 in Drehverbindung. Die Übertragung der Drehbewegung von der Antriebsvorrichtung 20 auf die Antriebsrollen 18 kann dabei auch unter Zwischenschaltung von Umsetzvorrichtungen 22, insbesondere Getriebeeinheiten 23 erfolgen. Die Umsetzvorrichtungen 22 können dabei z.B. durch Zahnradantriebe, durch Reibradantriebe und/oder durch Riemenantriebe gebildet sein und übernehmen gleichzeitig eine Umsetzung der Drehzahl der Antriebsrollen 18, sodaß eine entsprechende Transportgeschwindigkeit des Beleges 3 erzielt wird.

Eine auf die Zuführrichtung - Pfeil 7 - bezogene Längserstreckung des Beleges 3 ist dabei größer als ein ebenso auf die Zuführrichtung - Pfeil 7 - bezogener Abstand 24 zwischen der Außenseite der Zuführöffnung 4 und einem unteren bzw. oberen Totpunkt auf der Mantelfläche der ersten Antriebs- bzw. Transportrolle 18, 19. Dadurch ist sichergestellt, daß der Beleg 3 vom Bediener zumindest bis in den Erfassungsbereich der Transportvorrichtung 17 in die Leseeinheit 1 eingeschoben werden kann und sodann selbsttätig in die Leseeinheit 1 eingezogen wird.

Sobald der Beleg 3 außerhalb des Zugriffsbereiches des Bedieners ist, kann optional die Sperr- und Freigabevorrichtung 10 bzw. der Shutter 11 wieder geschlossen werden.

Der Beleg 3 wird nunmehr von der Transportvorrichtung 17 vollständig in die Leseeinheit 1 eingezogen.

Der Beleg 3 wird nachfolgend in Abhängigkeit der Transportvorrichtung 17 und in Abhängigkeit der elektrischen Beaufschlagung der Antriebsvorrichtung 15 auf eine Scannervorrichtung 25 der Leseeinheit 1 zubewegt. Bezogen auf die Förderrichtung des Beleges 3 vor der eigentlichen Scannervorrichtung 25 ist bevorzugt eine weitere Detektionsvorrichtung 26, insbesondere gebildet durch zumindest eine Infrarotlichtschranke 27, angeordnet. Die Detektionsvorrichtung 26 ist dabei zur Erfassung des von der Transportvorrichtung 17 beförderten Beleges 3 ausgebildet. Sobald der Beleg 3 von der Detektionsvorrichtung 26 erkannt bzw. erfaßt ist, wird die Scannervorrichtung 25 aktiviert. Die Detektionsvorrichtung 26 dient also zur Aktivierung der Scannervorrichtung 25 im Falle einer Annäherung eines zu erfassenden Beleges 3 an den Scannerbereich.

Bevorzugt sind die Detektionsvorrichtungen 8, 26 durch Lichtsende- und Lichtempfangseinheiten mit diesen zugeordneten optischen Prismen zur Lichtumlenkung gebildet. Die Lichtsende- und Lichtempfangseinheiten sind dabei gemeinsam einer der beiden Flachseiten des Beleges 3 zugeordnet, wohingegen das optische Prisma zur Lichtstrahlumlenkung der anderen Flachseite des Beleges 3 zugeordnet ist, sodaß die Lichtaussende- und Lichtempfangsstelle einer der beiden Seiten des Beleges 3 zugeordnet sind.

Die Scannervorrichtung 25 umfaßt dabei einen Kontaktscanner 28, der die auf dem Beleg 3 enthaltenen Abbildungen, wie zum Beispiel Schriftzeichen und grafische Zeichen, wie Kreuze, erfaßt und in entsprechende elektrische Signale umformt. Der Kontaktscanner 28 weist zumindest einen lichtdurchscheinenden oder transparenten Oberflächenbereich 29 auf, der eine untere oder auch obere Anlagefläche 30 für den an der Scannervorrichtung 25 vorbeigeführten Beleg 3 bildet. Die Antriebs- und/oder Transportrollen 18, 19 der Transportvorrichtung 17 pressen den Beleg 3 dabei derart gegen die Anlagefläche 30, daß dieser über dessen gesamten Flächenbereich mit der Anlagefläche 30 kontaktiert ist. Die Antriebs- bzw. Transportrollen 18, 19 bilden im Scannerbereich also eine Andrückvorrichtung 31, die den Beleg 3 vollflächig gegen die Auflagefläche 30 drückt und somit Wellenbildungen des Beleges 3 über dem Scannerbereich verhindert, bzw. etwaige Verformungen des Beleges 3 ebnet. Der transparente Oberflächenbereich 29 der Scannervorrichtung 25 kann zum Beispiel durch einen lichtdurchlässigen bzw. transparenten Körper, wie zum Beispiel eine Platte aus Glas oder Kunststoff, gebildet sein.

Weiters umfaßt die Scannervorrichtung 25 mehrere Lichtquellen 32, 33, die den optisch abzutastenden Beleg 3 beleuchten. Die Lichtquellen 32, 33 sind bevorzugt durch Leuchtdioden (LED) gebildet, können jedoch auch durch homogen leuchtende Gasentladungslampen oder fallweise auch durch Glühlampen gebildet sein.

Die Lichtquellen 32, 33 sind bevorzugt der die abzutastenden Informationen bzw. Zeichen aufweisenden Flachseite des Beleges 3 zugeordnet und strahlen ihr Licht zumindest in Richtung auf diese Flachseite des Beleges 3 ab. Insbesondere wird die der Anlagefläche 30 zugewandte Flachseite des Beleges 3 mit dem von den Lichtquellen 32, 33 abgestrahlten Licht beleuchtet.

Weiters umfaßt die Scannervorrichtung 25 bzw. der Kontaktscanner 28 einen optoelektrischen Wandler 34, der aus einer Vielzahl optoelektrischer Elemente besteht, die das auf deren Oberfläche eintreffende Licht in entsprechende elektrische Signale umsetzen. Der optoelektrische Wandler 34 besteht dabei aus einer Vielzahl linienförmig oder matrixförmig aneinandergereihter optoelektrischer Elemente, deren Größe bzw. deren Abstand voneinander die Höhe der grafischen Auflösung der Abtastzone bestimmt. Der optoelektrische Wandler 34 erfaßt dabei zumindest einen Teil der quer zur Transportrichtung des Beleges 3 verlaufenden Erstreckung. Das heißt, der die Vielzahl optoelektrischer Elemente aufweisende optoelektrische Wandler 34 erstreckt sich zumindest über einen Teilbereich der Flachseite des Beleges 3, sodaß die in dem jeweiligen Bereich des Beleges 3 enthaltenen Informationen bzw. Daten gesichert in berührungsloser Art und Weise abgetastet werden können.

Bevorzugt ist der optoelektrische Wandler 34 durch ein CCD-Element (Charge coupled device) gebildet, bei dem die einzelnen optoelektronischen Elemente zumindest einreihig angeordnet sind.

Mittels der von der Transportvorrichtung 17 erzeugten Relativbewegung zwischen dem Beleg 3 und der Scannervorrichtung 25 bzw. dem Kontaktscanner 28 ist auch die gesamte parallel zur Transportrichtung verlaufende Erstreckung des Beleges 3 abtastbar. Durch die quer zur Transportrichtung gerichtete Erstreckung des optoelektrischen Wandlers 34 und durch die Relativbewegung zwischen dem Beleg 3 und der Scannervorrichtung 25 sind also bestimmte Flächenbereiche, die zumindest einen Teilbereich einer Flachseite des Beleges 3 ausmachen, abtastbar. Der optoelektrische Wandler 34 wandelt dabei die an jedem optoelektrischen Element vorherrschenden Lichtverhältnisse, die zum Beispiel durch die Lichtstärke, durch die Lichtintensität und/oder durch die Farbe des Lichtes oder dergleichen definiert sind, in entsprechende, die jeweiligen Lichtverhältnisse repräsentierende elektrische Signale um.

Das von den Lichtquellen 32, 33 abgestrahlte Licht kann dabei durch weißes Licht oder auch durch Licht beliebiger Farbe gebildet sein. Bevorzugt strahlen die Lichtquellen 32, 33 jedoch färbiges Licht ab, um der Farbe des abgestrahlten Lichts entsprechende Farbbereiche bzw. Farbdarstellungen auf dem Beleg 3 auszublenden bzw. nicht mitzuscannen. Bevorzugt strahlen die Lichtquellen 32, 33 rotes Licht ab, um rote Schriftzeichen bzw. rote Graphiken oder Abbildungen auf dem Beleg 3, wie zum Beispiel auf einem Zahlschein nicht mitzuscannen bzw. auszublenden und dadurch die aufzunehmenden Informationen bzw. die daraus resultierende Datenmenge zu reduzieren. Das von den Lichtquellen 32, 33 abgestrahlte Licht entsprechender Farbe blendet also Abbildungen bzw. Schriftzeichen auf dem Beleg 3, welche gleiche oder ähnliche Farbe aufweisen aus. So sind zum Beispiel bei rot leuchtenden Lichtquellen 32, 33 alle Flächen des Beleges 3 mit roter oder gelber Farbe ausgeblendet, bzw. werden mit derartiger Farbe aufgebrachte Darstellungen am Beleg 3 nicht mitgescannt. Gegebenenfalls sind Lichtquellen 32, 33 für die Abstrahlung unterschiedlicher Wellenlängen von Licht, zum Beispiel zur Abstrahlung von rotem, grünen oder blauem Licht vorgesehen, um über diese rote, grüne oder blaue Lichtfarbe die jeweiligen in dieser Farbe gedruckten Abbildungen auf dem Beleg 3 ausblenden zu können.

Das im Scannerbereich refraktierte Licht wird bevorzugt über eine optische Linsenanordnung 35 auf dem optoelektrischen Wandler 34 abgebildet. Die Linsenanordnung 35 umfaßt hierbei zumindest eine Gradientenlinse 36 bzw. Abbildungslinse, die das refraktierte Licht auf dem optoelektrischen Wandler 34 bzw. auf dem CCD-Element abbildet. Dabei wird insbesondere das refraktierte Licht und nicht das Lichtspiegelungen enthaltende reflektierte Licht der Lichtquellen 32, 33 auf dem optoelektrischen Wandler 34 abgebildet, um möglichst vorlagengetreue Abbildungen auf dem optoelektrischen Wandler 34 zu erhalten. Der Beleg 3 wird in etwa mit einer Auflösung im Bereich zwischen 200 dpi bis 400 dpi (dots per inch) und zumindest 256 Graustufen gescannt. Selbstverständlich ist es auch möglich, höhere Auflösungen und/oder feiner abgestufte Auswertungen bzw. Farbdetektionen zu realisieren.

Der optisch abzutastende Beleg 3 wird dabei von den Lichtquellen 32, 33 zweiseitig beleuchtet, um Lichtreflexionen, die durch eine rauhe Papieroberfläche bedingt sein können, zu vermeiden. Die Lichtquellen 32, 33 sind dabei bezogen auf die Förderrichtung des Beleges 3 relativ zur Scannervorrichtung 25 vor und nach dem opto-elektrischen Wandler 34 angeordnet, sodaß der optoelektrische Wandler 34 bezogen auf die Transportrichtung des Beleges 3 zwischen zumindest zwei Lichtquellen 32, 33 angeordnet ist, bzw. von zumindest zwei Lichtquellen 32, 33 teilweise umgrenzt ist. Somit sind Schattenbildungen bzw. Lichtspiegelungen, die eine Verfälschung der optischen Abtastung bewirken würden, weitgehend ausgeschlossen.

Ein vom optoelektrischen Wandler 34 abgegebenes elektrisches Bildsignal 37, das die auf den optoelektrischen Wandler 34 einwirkenden Lichtzustände repräsentiert bzw. die am optoelektrischen Wandler 34 auftretenden Veränderungen der Lichtverhältnisse repräsentiert, ist für eine weitere elektronische Verarbeitung vorgesehen. Das den Lichtverhältnissen am optoelektrischen Wandler 34 entsprechende elektrische Bildsignal 37 ist dabei insbesondere durch ein Analogsignal 38 mit einer maximalen Amplitude im Bereich von einigen Volt gebildet.

Am Ausgang des optoelektrischen Wandlers 34 liegen also die die Abbildungen am einzulesenden Beleg 3 repräsentierenden elektrischen Bildsignale 37 für die weitere elektronische Datenverarbeitung an. Die Abtastfrequenz des optoelektrischen Wandlers 34 ist dabei auf die Transportgeschwindigkeit des Beleges 3 im Scannerbereich abgestimmt, sodaß eine ausreichende Auflösung der abzutastenden Flachseite des Beleges 3 erreicht ist und eventuelle Schriftzeichen auf dem Beleg 3 eindeutig voneinander unterscheidbar sind.

Nachdem sämtliche Komponenten der Leseeinheit 1 gewissen Toleranzen unterliegen, welche in Summe in unterschiedlichem Ausmaß das Abtastergebnis der Scannervorrichtung 25 beeinflussen, ist der Leseeinheit 1 eine Ausgleichsvorrichtung 39 zugeordnet, welche die elektrischen Bildsignale 37 der Scannervorrichtung 25 entsprechend adaptiert.

Die Ausgleichsvorrichtung 39 umfaßt hierzu eine elektrische Korrekturschaltung 40 für die der Scannervorrichtung 25 zugeführten und/oder für die von der Scannervorrichtung 25 abgegebenen elektrischen Signale.

Die Ausgleichsvorrichtung 39 kann also die in Abhängigkeit der Toleranzen der jeweiligen Komponenten der Leseeinheit 1 abgegebenen elektrischen Signale zu den Aktoren der Leseeinheit 1, wie z.B. die elektrischen Antriebssignale für die Transportvorrichtung 17 oder auch die an die Lichtquellen 32, 33 abgegebenen elektrischen Signale, derart angleichen, daß die diesen Komponenten innewohnenden Toleranzen ausgeglichen werden.

Bevorzugt werden jedoch die von den passiven Komponenten der Leseeinheit 1 abgegebenen elektrischen Signale bzw. Sensorsignale, unter welche auch die vom optoelektrischen Wandler 34 abgegebenen Bildsignale 37 einzureihen sind, über die Ausgleichsvorrichtung 39, insbesondere über die elektrische Korrekturschaltung 40 derart abgeglichen, daß die Toleranzen der aktiven Komponenten als auch der passiven Komponenten bzw. Sensorelemente der Leseeinheit 1 aufgehoben bzw. unwirksam sind.

Da die Toleranzen der eingesetzten Komponenten bei jeder einzelnen, produzierten Leseeinheit 1 gleicher Type und Aufbaus jeweils unterschiedlich sind, da die zur Leseeinheit 1 zusammengefaßten elektrischen bzw. elektromechanischen Bauteile und Module einen gewissen Toleranzbereich aufweisen, besteht immer eine gewisse Individualität bei Betrachtung einer einzelnen Leseeinheit 1 in bezug auf eine Mehrzahl von Leseeinheiten 1. Eventuelle Toleranzen können dabei z.B. in der Lichtempfindlichkeit des optoelektrischen Wandlers 34 bzw. des CCD-Chips, bei den Lichtquellen 32, 33 und damit in der Beleuchtung des Beleges 3 als auch beim mechanischen Aufbau der Leseeinheit 1, wie z.B. bei der Transportvorrichtung 17, auftreten, welche allesamt das Abtastergebnis beeinflussen würden, sofern keine Ausgleichsvorrichtung 39 vorgesehen wäre.

Die Ausgleichsvorrichtung 39 bzw. die Korrekturschaltung 40 für die Linearisierung der von der Scannervorrichtung 25 abgegebenen elektrischen Signale, insbesondere zur Linearisierung des Analogsignales 38, das die Bilddaten repräsentiert, erfolgt dabei über einen programmierbaren Linearisierungs-Chip 41 der Korrekturschaltung 40. Dieser individuell programmierbare Linearisierungs-Chip 41 kann dabei durch standardmäßig verfügbare Hardware-Bausteine von verschiedensten Herstellern, wie z.B. durch einen CCD-Prozessor, gebildet sein. Die Ausgleichsvorrichtung 39 bzw. der Linearisierungs-Chip 41 wird einmalig beim Produktionsprozeß vor dem Endtest der Leseeinheit 1 auf die jeweilige Leseeinheit 1 konkret abgeglichen. Zur Initialisierung der Leseeinheit 1 bzw. der Scannervorrichtung 25 werden also bei der Produktion der Leseeinheit 1 einmalig die jeweiligen Korrekturdaten für den entsprechenden Aufbau ermittelt. Die Ermittlung dieser individuellen Korrekturdaten für eine ganz bestimmte Leseeinheit 1 bzw. Scannervorrichtung 25 kann dabei durch Zuführen eines Beleges 3 mit Test- bzw. Referenzmustern erfolgen. Weiters ist es möglich die Korrekturwerte durch gezielte Messungen an den einzelnen Komponenten, wie z. B. am optoelektrischen Wandler 34 in bezug auf bestimmte Betriebszustände, wie z. B. eine optische Abtastung des Scannerbereiches ohne des Vorhandenseins eines Beleges 2, zu ermitteln.

Diese konkret auf die jeweilige Scannervorrichtung 25 bzw. auf die jeweilige Leseeinheit 1 abgestimmten Korrekturdaten sind in einer separaten Speichervorrichtung 42 hinterlegt. Die Speichervorrichtung 42 ist dabei bevorzugt durch einen nicht flüchtigen Lesespeicher, wie z.B. durch einen EPROM- bzw. durch einen EEPROM-Speicher, gebildet. Die Speichervorrichtung 42 ist dabei direkt der Scannervorrichtung 25 bzw. dem optoelektrischen Wandler 34 mit den zugehörigen Lichtquellen 32, 33 und der Linsenanordnung 35 zugeordnet. Die Speichervorrichtung 42 mit den individuellen Korrekturdaten bildet also mit der eigentlichen Scannervorrichtung 25 eine kompakte Baueinheit bzw. ein mit definierten Schnittstellen versehenes Abtast- und Speichermodul 43. Bevorzugt ist die Speichervorrichtung 42 mit den Korrekturdaten auf der Printplatte des Scannerkopfes angeordnet und somit direkt dem die Bilddaten des Beleges 3 generierenden Bauteil zugeordnet. Somit ist verhindert, daß bei einem allfälligen Tausch der Scannervorrichtung 25 in der Leseeinheit 1 unpassende Korrekturdaten zum Einsatz kommen, da jeweils das Abtast- und Speichermodul 43 mit den vordefinierten Schnittstellen zu den Peripheriegeräten mitsamt der nicht flüchtigen Speichervorrichtung 42 für die individuellen Korrekturdaten für die Abtastbildpunkte in einfacher Art und Weise ersetzt werden kann.

Zur Steuerung der einzelnen Abläufe und/oder zur Auswertung der über die Scannervorrichtung 25 ermittelten Bilddaten des Beleges 3 ist der Leseeinheit 1 eine Steuerund/oder Auswertevorrichtung 44 zugeordnet. Die zentrale Steuer- und/oder Auswertevorrichtung 44 der Leseeinheit 1 besteht bevorzugt aus Komponenten der Digitaltechnik und umfaßt beispielsweise zumindest einen Mikrokontroller 45 und/oder Zeitgeberbausteine und/oder Treiberbausteine und/oder Signalumsetzvorrichtungen und/oder weiteren Speichervorrichtungen 46 zur Speicherung des vom Mikrokontroller 45 abzuarbeitenden Programms und/oder zur Speicherung von Zwischenergebnissen bzw. Rechenergebnissen oder sonstigen Daten. Die weitere Speichervorrichtung 46 dient aber auch zur Zwischenspeicherung der von der nicht flüchtigen Speichervorrichtung 42 dauerhaft gespeicherten Korrekturdaten. Insbesondere werden die Korrekturdaten beim Start bzw. bei der Initialisierung der Leseeinheit 1 von der ersten Speichervorrichtung 42 in die weitere Speichervorrichtung 46, auf welche naturgemäß eine vergleichsweise kurze Zugriffszeit besteht, übertragen, sodaß der Ausgleichsvorrichtung 39 die benötigten Korrekturdaten unverzüglich zur Verfügung stehen. Die für jede Leseeinheit 1 individuell ermittelten und in der ersten Speichervorrichtung 42 dauerhaft gespeicherten Korrekturdaten werden bei jedem Startvorgang der Leseeinheit 1 gesteuert von der Steuer- und/oder Auswertevorrichtung 44 seriell in die weitere Speichervorrichtung 46, die bevorzugt durch RAM-Speicherbausteine gebildet ist, übertragen. Auf die weitere Speichervorrichtung 46 mit den bei jedem Hochlauf erneut übertragenen Korrekturdaten kann dann von der Korrekturschaltung 40 bzw. vom Linearisierungs-Chip 41 wesentlich rascher, insbesondere parallel zugegriffen werden.

Die Steuer- und/oder Auswertevorrichtung 44 ist zumindest mit einem Teil der aktiven und passiven Komponenten der Leseeinheit 1 leitungsverbunden. So ist die Steuerund/oder Auswertevorrichtung 44 über zumindest jeweils eine Leitung 47, 48 mit den Detektionsvorrichtungen 8, 26 und über zumindest jeweils eine Leitung 49, 50 mit der Sperr- und Freigabevorrichtung 10 sowie mit der Antriebsvorrichtung 20 leitungsverbunden, um so entweder die von diesen Elementen abgegebenen elektrischen Signale empfangen zu können bzw. die diversen Komponenten mit entsprechenden elektrischen Signalen versorgen zu können.

Ebenso ist die Speichervorrichtung 42 mit den Korrekturdaten zum Ausgleich der Toleranzen der Leseeinheit 1 über zumindest eine Leitung 51 mit der Steuer- und/oder Auswertevorrichtung 44 verbunden, um die Korrekturdaten aus der Speichervorrichtung 42 auslesen zu können. Die Korrekturdaten sind dabei in digitaler Form in der Speichervorrichtung 42 hinterlegt und können durch die Steuer- und/oder Auswertevorrichtung 44, insbesondere durch den Mikrokontroller 45, ausgelesen und nachfolgend in die weitere Speichervorrichtung 46 geschrieben werden. Die von der Speichervorrichtung 42 bzw. von der weiteren Speichervorrichtung ausgelesenen digitalen Korrekturdaten werden in der Steuer- und/oder Auswertevorrichtung 44 gegebenenfalls weiterverarbeitet und einer Umsetzvorrichtung 52, insbesondere einem Digital/Analog-Wandler 53 zugeführt. Die Umsetzvorrichtung 52 erzeugt aus den zugeführten digitalen Korrekturdaten ausgangsseitig ein Korrektursignal 54, insbesondere in analoger Form, welches mit dem von der Scannervorrichtung 25 abgegebenen Analogsignal 38, das vom optoelektrischen Wandler 34 zur Verfügung gestellt wird und den Abbildungen am Beleg 3 entspricht, überlagert wird. Die Überlagerung des die Korrekturdaten repräsentierenden analogen Korrektursignals 54 mit dem analogen Bildsignal 37 des optoelektrischen Wandlers 34 erfolgt dabei an einer Überlagerungsstelle 55, an welcher das Korrektursignal 54 mit dem Bildsignal 37 zusammengeführt wird.

Die Überlagerung des analogen Korrektursignals 54 mit dem die Bilddaten repräsentierenden Analogsignal 38 ergibt also ein korrigiertes Bildsignal 56, welches den tatsächlichen Abbildungen auf dem Beleg 3 absolut entspricht. Dieses korrigierte Bildsignal 56 ist dabei ein analoges Signal, das nachfolgend einer weiteren Umsetzvorrichtung 57, welche insbesondere durch einen Analog/Digital-Wandler 58 gebildet ist, zugeführt wird und welche das korrigierte analoge Bildsignal 56 in korrigierte digitale Bilddaten umsetzt.

Die Steuer- und/oder Auswertevorrichtung 44 ist zur Aufnahme dieser digitalisierten, korrigierten Bilddaten ausgebildet und hinterlegt diese in einem der Steuer- und/oder Auswertevorrichtung 44 zugeordneten Zwischenspeicher 59.

Dieser Zwischenspeicher 59 ist insbesondere durch ein Schieberegister 60 gebildet, welches zumindest die Bilddaten einer Abtastzeile des Dokumentes 2 aufnehmen kann. Dieses Schieberegister 60 bzw. dieser FIFO-Speicher (first in first out) ist bevorzugt mit der Steuer- und/oder Auswertevorrichtung 44 der Leseeinheit 1 verbunden, sodaß diese für die weitere Verarbeitung oder für eine weitere Übertragung bereitgestellt sind.

Aufbereitet von der Steuer- und/oder Auswertevorrichtung 44 der Leseeinheit 1, die auch durch einen Mikroprozessor gebildet sein kann, können die Bilddaten über eine Schnittstelle 61 zu einem übergeordneten Rechner 62, insbesondere zu einem Personal-Computer 63, übertragen werden. Der übergeordnete Rechner 62 verarbeitet die von der Leseeinheit 1 gelesenen Daten und läßt diese in einen Datenverbund, wie z.B. in ein Datennetzwerk des Bankwesen, einfließen.

Gegebenenfalls führt der Rechner 62 ein OCR-Programm aus, das die grafischen Bildinformationen in elektronisch verarbeitbare Textinformationen bzw. Textdateien umsetzt.

Die Schnittstelle 61 zwischen der Leseeinheit 1 und dem übergeordneten Rechner 62 z.B. eines Bankterminals, ist dabei als Trenn- und Verbindungsstelle eines Bussystems 64 zwischen der Leseeinheit 1 und dem Rechner 62 ausgebildet. Als Bussystem 64 können hierbei sämtliche aus dem Stand der Technik bekannte Bussysteme zur Übertragung von Daten eingesetzt werden. Bevorzugt wird jedoch die standardisierte Centronics-Parallelschnittstelle oder auch eine USB-Schnittstelle (universal serial bus) zur Datenübertragung zwischen dem übergeordneten Rechner 62 und der optoelektrischen Leseeinheit 1 eingesetzt.

Das von den Detektionsvorrichtungen 8, 26 abgestrahlte Licht wird bevorzugt von der Steuer- und/oder Auswertevorrichtung 44 überwacht. Erkennt die Steuer- und/oder Auswertevorrichtung 44 dabei eine Veränderung der Lichtintensität, so wird der den Detektionsvorrichtungen zugeführte elektrische Strom entsprechend angepaßt, sodaß Alterungserscheinungen und/oder geringfügige Verunreinigungen weitgehend kompensiert sind und die Detektierungsgenauigkeit weitgehend erhalten bleibt. Verlassen die Nachregulierungsgrößen dabei gewisse Grenzen, so wird von der Steuer- und/oder Auswertevorrichtung 44 bevorzugt ein Reinigungs- bzw. Wartungshinweis betreffend die Detektionsvorrichtungen 8, 26 ausgegeben.

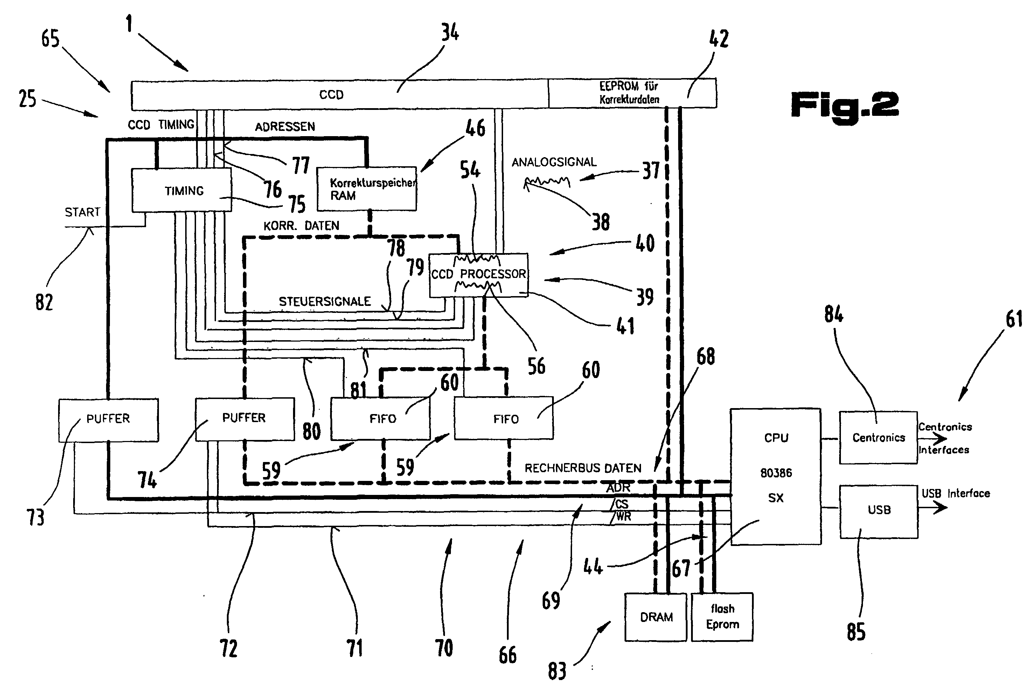

Fig. 2 zeigt ein stark vereinfachtes Blockschaltbild der wesentlichsten Komponenten der Elektronik für die Leseeinheit 1 bzw. einer Scannerelektronik 65 für die Leseeinheit 1. Unter dieser Scannerelektronik 65 sind hierbei die Ausgleichsvorrichtung 39, der optoelektrische Wandler 34, die Speichervorrichtung 42, 46 für die Korrekturwerte der Scannervorrichtung 25 und die Zwischenspeicher 59 bzw. Schieberegister 60, welche einem Rechnerbus 66 der Steuer- und/oder Auswertevorrichtung 44 der Leseeinheit 1 zugeordnet sind, zu verstehen. Die Steuer- und/oder Auswertevorrichtung 44 der Scannerelektronik 65 ist insbesondere durch einen Mikroprozessor 67 gebildet, der über den Rechnerbus 66 Daten in digitaler Form übertragen und empfangen kann. Der Rechnerbus 66 umfaßt, wie an sich bekannt, einen Datenbus 68, einen Adreßbus 69 oder auch einen kombinierten Adreß/Datenbus.

Der Datenbus 68 und Adreßbus 69 umfaßt mehrere Leitungen, um mehrere Bits eines Datenwortes gleichzeitig übertragen zu können. Weiters umfaßt der Rechnerbus 66 einen Steuerbus 70 mit mehreren Steuerleitungen, wie z.B. eine Schreib-/Leseleitung 71 und eine Wählleitung 72 (chip select) zur Anwahl bestimmter Bauteilgruppen, insbesondere zur gezielten Auswahl bestimmter Speicherbausteine.

Wie weiters aus Fig. 2 ersichtlich ist, umfaßt die Ausgleichsvorrichtung 39 einen CCD-Prozessor als Linearisierungs-Chip 41. Dieser Linearisierungs-Chip 41 bzw. CCD-Prozessor ist mit dem optoelektrischen Wandler 34, insbesondere mit dem CCD-Element leitungsverbunden, um die von diesem abgegebenen Bildsignale 37 analoger Signalform verarbeiten zu können. Weiters ist der Linearisierungs-Chip 41 über den Datenbus 68 mit der weiteren Speichervorrichtung 46 mit den hinterlegten Korrekturwerten zum Ausgleich der Toleranzen der Leseeinheit 1 leitungsverbunden, um die entsprechenden Korrekturwerte rasch einlesen zu können. Weiters ist die erste, nicht flüchtige Speichervorrichtung 42 an den Datenbus 68 geschaltet, um während der Startphase die dauerhaft gespeicherten Korrekturdaten gesteuert von der Steuer- und/oder Auswertevorrichtung 44 in die weitere Speichervorrichtung 46 übertragen zu können. Für den Linearisierungs-Chip 41 besteht direkter Zugriff auf die Speichervorrichtung 46 sodaß vergleichsweise hohe Datenübertragungsraten ermöglicht sind.

Die Ausgleichsvorrichtung 39 bzw. der Linearisierungs-Chip 41 überlagert das eingehende Bildsignal 37 mit einem den Korrekturwerten in der Speichervorrichtung 42 entsprechenden Korrektursignal 54. Insbesondere verändert der Linearisierungs-Chip 41 bzw. CCD-Prozessor die von den einzelnen Abtastbildpunkten gewonnenen Signalwerte des Analogsignals 38 in Abhängigkeit der jedem einzelnen Abtastbildpunkt zugeordneten Korrekturwerte in der Speichervorrichtung 42, 46.

Die Ausgleichsvorrichtung 39 bzw. der Linearisierungs-Chip 41 hat also für jeden vom Beleg 3 abzutastenden Bildpunkt bzw. für jedes Pixel einen Korrekturwert in der Speichervorrichtung 42 bzw. 46 hinterlegt, welche beim Einlesen des Bildsignals 37 den einzelnen Signalwerten entsprechend zugeordnet werden. Die Ausgleichsvorrichtung 39 bzw. Korrekturschaltung 40 addiert beispielsweise die den einzelnen Signalwerten des Bildsignals 37 zugehörigen Korrekturwerte den jeweiligen Bildsignalwerten hinzu bzw. subtrahiert die Korrekturschaltung 40 die Korrekturwerte von den einzelnen Signalwerten des Bildsignals 37. Die Korrektur der vom optoelektrischen Wandler 34 abgegebenen Bildsignale 37 über die Ausgleichsvorrichtung 39 erfolgt dabei in Echtzeit, d.h., die von der Ausgleichsvorrichtung 39 verarbeiteten Daten werden in dieser nicht zwischengespeichert sondern unmittelbar bearbeitet und unverzüglich weitergeleitet.

Insbesondere addiert der Linearisierungs-Chip 41 die von den einzelnen Bildpunkten gewonnenen Werte mit den zugehörigen, in der Speichervorrichtung 46 hinterlegten Korrekturwerten und führt somit einen Offset-Abgleich durch. Weiters multipliziert der Linearisierungs-Chip 41 die von den einzelnen Bildpunkten gewonnenen Werte mit den zugehörigen, in der Speichervorrichtung 46 hinterlegten Korrekturwerten und führt somit eine Skalierung des Abtastbildes aus. Selbstverständlich ist es auch möglich, den Offsetabgleich und die Skalierung des Abtastbildes durch mathematische Subtraktionen und Divisionen der Abtastwerte mit den Korrekturwerten über die Korrekturschaltung 40 auszuführen.

Das von der Ausgleichsvorrichtung 39 generierte, korrigierte, analoge Bildsignal 56 wird sodann digitalisiert und auf den Datenbus 68 gelegt. Insbesondere werden die korrigierten, digitalen Bilddaten von der Ausgleichsvorrichtung 39 bzw. vom CCD-Prozessor an den Zwischenspeicher 59 bzw. an die Schieberegister 60 übergeben. Die Steuer- und/oder Auswertevorrichtung 44 bzw. der Mikroprozessor 67 der Leseeinheit 1 liest nachfolgend die den Schieberegistern 60 zugeführten, korrigierten Bilddaten über den Rechnerbus 66 aus.

Die Scannerelektronik 65 umfaßt dabei zumindest zwei Schieberegister 60, in welche die vom Linearisierungs-Chip 41 generierten, korrigierten Bilddaten getaktet eingeschoben werden.

Weiters ist dem Datenbus 68 und dem Adreßbus 69 des Rechnerbusses 66 zumindest jeweils ein elektronischer Pufferspeicher 73, 74 zur Zwischenspeicherung von Adressen und Daten des Rechnerbusses 66 zugeordnet.

Die Pufferspeicher 73, 74 dienen der Zwischenspeicherung von Adressen und Daten, die von der Steuer- und/oder Auswertevorrichtung 44 zu den weiteren Komponenten der Scannerelektronik 65 übertragen werden bzw. dienen diese zur Zwischenspeicherung der Daten bzw. Adressen von den jeweiligen Komponenten der Scannerelektronik 65 bei der Übertragung zur Steuer- und/oder Auswertevorrichtung 44.

Der Datenbus 68 stellt demnach eine Leitungsverbindung zwischen der Steuer- und/oder Auswertevorrichtung 44, den Schieberegistern 60, dem Pufferspeicher 74, den Speichervorrichtungen 42, 46 und dem Linearisierungs-Chip 41 her. Der Adreßbus 69 stellt eine Leitungsverbindung zur Übertragung von Adressen zwischen der Steuerund/oder Auswertevorrichtung 44, dem Pufferspeicher 73 zur Zwischenspeicherung von Adressen, den Speichervorrichtungen 42, 46 für die Korrekturwerte und einer Ablaufkontrollvorrichtung 75 her.

Die Ablaufkontrollvorrichtung 75 steuert die zeitlichen Abläufe der Scannerelektronik 65 und ist hierfür über mehrere Steuerleitungen 76, 77 mit dem optoelektrischen Wandler 34 und zusätzlich über mehrere Steuerleitungen 78, 79 mit dem Linearisierungs-Chip 41 leitungsverbunden. Darüber hinaus ist die Ablaufkontrollvorrichtung 75 über zumindest je eine Steuerleitung 80, 81 mit je einem der Schieberegister 60 leitungsverbunden, um diese entsprechend getaktet ansteuern zu können.

Die das Timing der Scannerelektronik 65 übernehmende Ablaufkontrollvorrichtung 75 ist für die Einleitung des Ablaufprogrammes über zumindest eine weitere Steuerleitung 82 aktivierbar.

Die Steuer- und/oder Auswertevorrichtung 44 der den mechanischen Komponenten der Leseeinheit 1 unmittelbar zugeordneten bzw. an diesen montierten Scannerelektronik 65 ist insbesondere durch den Mikroprozessor 67, z.B. der Type Intel 80386 SX gebildet. Das vom Mikroprozessor 67 abzuarbeitende Softwareprogramm ist in einem diesem zugeordneten Datenspeicher 83, welcher z.B. durch Flash-EPROM Speicherbausteine gebildet ist, die an die jeweiligen Leitungen des Rechnerbus 66 entsprechend angeschlossen sind, hinterlegt.

Weiters umfaßt der dem Mikroprozessor 67 zugeordnete Datenspeicher 83 eine weitere elektronische Speichervorrichtung zur Speicherung bzw. Zwischenspeicherung von Zwischenergebnissen des Mikroprozessors 67. Diese weitere Speichervorrichtung des Datenspeichers 83 ist bevorzugt durch einen dynamischen, flüchtigen Speicher, insbesondere in Art eines DRAM gebildet, welches mit den entsprechenden Leitungen des Rechnerbusses 66 verbunden ist.

Wie vorhergehend bereits erwähnt, ist der Mikroprozessor 67 der Scannerelektronik 65 über zumindest eine Schnittstelle 61, welche z.B. durch eine Centronics- oder eine USB-Schnittstelle gebildet ist, mit dem in Fig. 1 dargestellten, übergeordneten Rechner 62, z.B. in einem Bankterminal verbunden. Über diese Schnittstelle 61 mit den diesen zugeordneten Umsetzvorrichtungen 84, 85 zur Umsetzung des jeweiligen Übertragungsprotokolls können die über die Leseeinheit 1 vom Beleg 3 abgetasteten Bilddaten in elektrischer Form an den übergeordneten Rechner 62 - siehe Fig. 1 - übertragen werden, welcher dann die weitere Verarbeitung dieser Bildinformationen, beispielsweise über ein OCR-Programm vornimmt.

Wie insbesondere Fig. 1 zu entnehmen ist, ist die Scannervorrichtung 25 bzw. das Abtast- und Speichermodul 43 mit den vordefinierten elektrischen Schnittstellen zu den Komponenten der Scannerelektronik 65 um zumindest eine Drehachse 86 bedarfsweise schwenkbar gelagert. Diese Drehachse 86 einer Gelenksanordnung 87 verläuft dabei bevorzugt quer zur Zuführ- bzw. Transportrichtung - Pfeil 7 - des Beleges 3 im Bereich der Scannervorrichtung 25 und im wesentlichen parallel zur bevorzugt gläsernen Anlagefläche 30 des Beleges 3 an der eigentlichen Scannervorrichtung 25. Somit ist die zumindest aus dem optoelektrischen Wandler 34, der Linsenanordnung 35, den Lichtquellen 32, 33 und dem Scannerkopf mit der Speichervorrichtung 42 für die Korrekturdaten gebildete Baueinheit um diese Drehachse 86, z.B. für eine Reinigung der transparenten Abdeckplatte dieser Baueinheit, bedarfsweise verschwenkbar. Die Verstellung der Scannervorrichtung 25 von einer in Fig. 1 dargestellten Ruhelage in eine davon abweichende Schwenklage ist dabei über eine Verstell- und/oder Arretiervorrichtung 88 ermöglicht. Über diese bevorzugt manuell vom Wartungspersonal der Leseeinheit 1 zu betätigende Verstell- und/oder Arretiervorrichtung 88 kann die Schwenkbewegung der Scannervorrichtung 25 um die Drehachse 86 freigegeben bzw. verriegelt werden. Die Verstell- und/oder Arretiervorrichtung 88 arretiert die Scannervorrichtung 25 im Normalzustand derart, daß die Anlagefläche 30 für den Beleg 3 im wesentlichen parallel zur Führungsvorrichtung 6 bzw. zur Führungsbahn im Bereich der Scannervorrichtung 25 verläuft und diese im wesentlichen stufenlos fortsetzt.

Wird nun die Verstell- und/oder Arretiervorrichtung 88, welche beispielsweise durch einen Sperrhebel oder durch einen Bajonettverschluß gebildet sein kann, vom Wartungspersonal bzw. zuständigen Besitzer nach Abnahme von eventuellen Gehäuseabdeckungen an der Leseeinheit 1 in die Freigabestellung versetzt, so kann die Scannervorrichtung 25 als Baueinheit mitsamt den Anlageflächen 30 auf der transparenten Abdeckplatte um die Drehachse 86 in eine für eine Reinigung günstige Lage verschwenkt werden. Durch das Aufklappen der als Baueinheit ausgebildeten Scannervorrichtung 25 um diese Drehachse 86 wird die transparente Anlagefläche 30 für den Beleg 3 frei zugänglich, da diese von bevorzugt vorhandenen Andrückvorrichtungen 31 oder von Walzen der Transportvorrichtung 17 wegbewegt wird und dadurch eine gründliche Reinigung auf Grund guter Zugänglichkeit möglich ist. Nach erfolgter Reinigung bzw. Wartung der Scannervorrichtung 25 kann diese wiederum in die in Fig. 1 dargestellte Ausgangs- bzw. Ruhelage, in welcher eine Abtastung von einlaufenden Belegen 3 möglich ist und in welcher die Anlagefläche 30 im wesentlichen parallel zur Flachseite von einlaufenden Belegen 3 ausgerichtet ist, zurückgeschwenkt werden. In der Ausgangs- bzw. Ruhelage werden die Arretiermittel der Verstell- und/oder Arretiervorrichtung 88 bevorzugt selbsttätig aktiviert, sodaß die Scannervorrichtung 25 automatisch mit dem Zurückschwenken in die Ausgangslage arretiert ist.

Um die Ansammlung von Schmutzpartikeln auf der transparenten Platte der Scannervorrichtung 25 weitgehend zu unterbinden, ist die Scannervorrichtung 25 abweichend von der schematischen Darstellung in Fig. 1 bevorzugt der oberen Flachseite eines einlaufenden Beleges 3 zugeordnet. Insbesondere ist die transparente Platte mit der Anlagefläche 30 für den Beleg 3 der oberen Flachseite des Beleges 3 zugeordnet und steht dabei mit dieser in direktem Kontakt. Die Andrückvorrichtung 31, welche bevorzugt durch eine quer zur Transportrichtung - Pfeil 7 - des Beleges 3 im Scannerbereich verlaufende Antriebsrolle 18 gebildet ist, ist dabei der unteren Flachseite des Beleges 3 zugeordnet und drückt diesen möglichst ebenflächig gegen die oberhalb angeordnete Anlagefläche 30. Die Schwenkachse bzw. Mittellinie der Andrückvorrichtung 31 bzw. Andrückwalze verläuft dabei exakt parallel zur Längserstreckung des optoelektrischen Wandlers 34 und exakt parallel zur Ebene der Anlagefläche 30.

Nachdem die Leseeinheit 1 im allgemeinen nach dem Abnehmen von Gehäuseteilen von oben zugänglich ist, und die Scannervorrichtung 25 mit der transparenten Abdeckplatte für die Lichtquellen 32, 33, der Linsenanordnung 35 und dem optoelektrischen Wandler 34 um die Drehachse 86 in etwa um 180° verschwenkbar ist, kann die Abdeckplatte direkt eingesehen und inspiziert werden. Die üblicherweise auf der unteren Flachseite der Abdeckplatte ausgebildete Anlagefläche 30 kann somit mittels der Gelenksanordnung 87 für Reinigungszwecke aus der Vogelperspektive von oben eingesehen werden und für den Scannvorgang in die ursprüngliche Lage versetzt werden, in welcher eine Ansammlung von Papierrückständen oder Staubpartikeln auf der Anlagefläche 30 weitgehend verhindert ist.

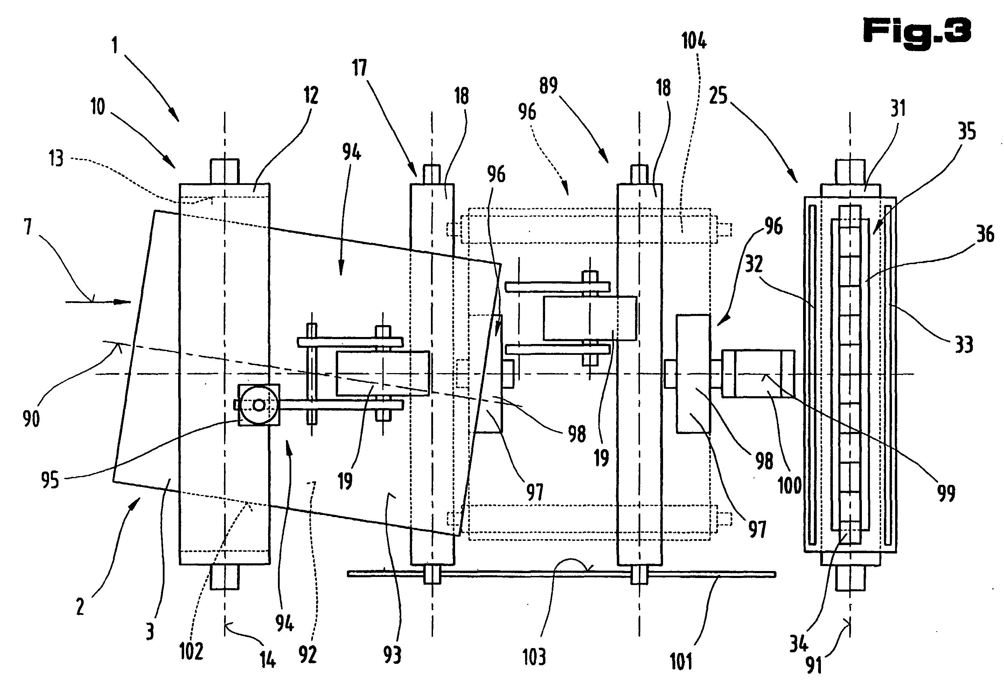

Wie insbesondere aus Fig. 3 ersichtlich ist, kann die Leseeinheit 1 auch eine Ausrichtvorrichtung 89 zur Ausrichtung von verkantet in die Leseeinheit 1 eingeführten Dokumenten 2 bzw. Belegen 3 aufweisen. Diese Ausrichtvorrichtung 89 ist bezogen auf die Zuführ- bzw. Transportrichtung - Pfeil 7 - des Beleges 3 bevorzugt vor der Scannervorrichtung 25 für die optische Abtastung des einzulesenden Beleges 3 angeordnet. Insbesondere ist die Ausrichtvorrichtung 89 im Bereich zwischen der Sperr- und Freigabevorrichtung 10 und der Scannervorrichtung 25 angeordnet, um vom Bediener der Leseeinheit 1 schiefwinkelig zugeführte Belege 3 vor dem eigentlichen Scannvorgang über die Ausrichtvorrichtung 89 bezüglich ihrer Orientierung einheitlich ausrichten zu können. Mittels dieser Ausrichtvorrichtung 89 wird also erreicht, daß eine Mittelachse 90 des abzutastenden Beleges 3 im wesentlichen rechtwinkelig zu einer Längsmittelachse 91 des optoelektrischen Wandlers 34 bzw. im wesentlichen rechtwinkelig zur Drehachse der walzenartigen Andrückvorrichtung 31 im Bereich der Scannervorrichtung 25 ausgerichtet wird, bevor der Beleg 3 durch die Scannervorrichtung 25 befördert wird.

Wie in Fig. 3 dargestellt, kann ein vom Bediener der Leseeinheit 1 schiefwinkelig zur eigentlichen Zuführ- bzw. Transportrichtung - Pfeil 7 - eingeschobener Beleg 3 über die freigegebene Sperr- und Freigabevorrichtung 10 hinweg auf den Scannerbereich zugeführt werden. Die Beförderung des Beleges 3 wird dabei von der elektromotorischen Transportvorrichtung 17 bewerkstelligt. Sobald der Beleg 3 in den Wirkungsbereich der Ausrichtvorrichtung 89 gelangt ist, wird die Transportvorrichtung 17 gesteuert von der insbesondere aus Fig. 1 ersichtlichen Steuer- und/oder Auswertevorrichtung 44 angehalten. Die Beförderung des Beleges 3 erfolgt dabei bevorzugt unter der Einwirkung der Antriebs- und Transportrollen 18, 19 auf eine untere und obere Flachseite 92, 93 des Beleges 3. Für die Beförderung des Beleges 3 stehen also die Antriebsund/oder Transportrollen 18, 19 der Transportvorrichtung 17 mit der unteren und der oberen Flachseite 92, 93 in Kontakt bzw. in reibschlüssiger Verbindung. Sobald der Beleg in den Wirkungsbereich der Ausrichtvorrichtung 89 eingelaufen ist, stoppt die Transportvorrichtung 17 und die Antriebs- und/oder Transportrollen 18, 19 werden von der unteren oder der oberen Flachseite 92, 93, insbesondere jedoch von der oberen Flachseite 93 abgehoben, sodaß der Reibschluß der Rollen bzw. Walzen der Transportvorrichtung 17 mit zumindest einer Flachseite 92, 93 des Beleges 3 aufgehoben ist. Die Aufhebung des Reibschlusses zwischen dem Beleg 3 und den Fördermitteln der Transportvorrichtung 17 ist dabei durch eine Verstellvorrichtung 94 ermöglicht, über welche die Antriebs- bzw. Transportrollen 18, 19 in vertikaler Richtung von den die Flachseiten 92, 93 bildenden Ebenen des Beleges 3 wegbewegt werden können.

Die Verstellvorrichtung 94 ist mit der Steuer- und/oder Auswertevorrichtung 44 der Leseeinheit 1 leitungsverbunden und von dieser gesteuert. Die Verstellbewegung der Antriebs- bzw. Transportrollen 18, 19 in vertikaler Richtung zu den Flachseiten 92, 93 des Beleges 3 kann dabei z.B. durch elektromotorische oder elektromagnetische Antriebsmittel 95, wie z.B. Zugankermagnete erreicht werden. Die Verstellbewegung der Antriebs- bzw. Transportrollen 18, 19 kann dabei durch eine Schwenkhebellagerung - wie dies in Fig. 3 dargestellt ist - oder auch durch translatorische Lagervorrichtungen, wie z.B. in Vertikalführungsbahnen geführte Lagerzapfen der Rollen erzielt werden, wobei die von der Steuer- und/oder Auswertevorrichtung 44 gesteuerten Antriebsmittel 95 die Verstellbewegung der Verstellvorrichtung 94 einleiten.

Nachdem zumindest einige der Antriebs- bzw. Transportrollen 18, 19 von zumindest einer Flachseite 92, 93 des Beleges 3 distanziert sind und der Beleg 3 im wesentlichen nur mit der dem Gewicht des Beleges 3 entsprechenden Schwerkraft auf den restlichen Antriebs- bzw. Transportrollen 18, 19 aufliegt und daher von diesen nicht mehr eingeklemmt ist, wird die Ausrichtvorrichtung 89 aktiviert.

Die Ausrichtvorrichtung 89 umfaßt zumindest eine Querfördervorrichtung 96, die eine Verschiebung des Beleges 3 quer zur üblichen Zuführ- bzw. Transportrichtung - Pfeil 7 - bewirkt. Diese Querfördervorrichtung 96 weist hierzu Querfördermittel 97 auf, die bevorzugt durch Querförderrollen 98 bzw. Querförderwalzen gebildet sind, deren Drehachse 99 parallel zur üblichen Zuführ- bzw. Transportrichtung - Pfeil 7 - des Beleges 3 verläuft. Insbesondere verlaufen die Drehachsen 99 der Querfördermittel 97 quer zu den Drehachsen der Antriebs- bzw. Transportrollen 18, 19 der Transportvorrichtung 17 und im wesentlichen parallel zu den Flachseiten 92, 93 des Beleges 3. Die Querfördermittel 97 der Querfördervorrichtung 96 stehen dabei mit zumindest einer Flachseite 92, 93 des Beleges 3 in Reibschluß. Bevorzugt stehen die Querfördermittel 97 aber mit der unteren Flachseite 92 des Beleges 3 in reibschlüssigem Kontakt.

Mittels den Querfördermitteln 97 bzw. Querförderrollen 98 zugeordneten Antriebsmitteln 100 können diese gesteuert von der Steuer- und/oder Auswertevorrichtung 44 in Drehbewegung versetzt werden und bewegen somit den Beleg 3 quer zur üblichen Zuführ- bzw. Transportrichtung - Pfeil 7 - auf ein Anschlagelement 101 zu. Der Reibschluß zwischen der bevorzugt unteren Flachseite 92 des Beleges 3 ist dabei derart hoch, daß eine zuverlässige Querförderung des Beleges 3 stattfindet. Die Querfördervorrichtung 96 ist dabei zumindest solange aktiviert, bis eine dem Anschlagelement 101 zugewandte Seitenkante 102 des Beleges 3 weitgehend durchgängig an einer Anschlagfläche 103 des leistenförmigen Anschlagelementes 101 anliegt. Dadurch wird erreicht, daß die Mittelachse 90 des Beleges 3 weitgehend rechtwinkelig zur Längsmittelachse 91 des optoelektrischen Wandlers 34 verläuft und somit eine einheitliche, vordefinierte Ausrichtung für den Scannvorgang erzielt ist. Nach erfolgter Ausrichtung des Beleges 3 über die Querfördervorrichtung 96 werden die abgehobenen Antriebs- bzw. Transportrollen 18, 19 über die Verstellvorrichtung 94 bevorzugt wieder in Kontakt mit beiden Flachseiten 92, 93 des Beleges 3 versetzt, wobei zuvor die Querfördervorrichtung 96 deaktiviert wird. Nachfolgend wird die Transportvorrichtung 17 wiederum aktiviert und der Beleg 3 mit der parallel zur Anschlagfläche 103 ausgerichteten Seitenkante 102 läuft durch die aktivierte Scannervorrichtung 25 hindurch.

Anstelle der beschriebenen Querförderrollen 98 der Querfördervorrichtung 96 ist es wie in strichlierten Linien dargestellt auch möglich, ein Förderband 104 auszubilden, das mit zumindest einer Flachseite 92, 93 des Beleges 3 in großflächigem Kontakt steht und einen ausreichenden Reibschlußwert zwischen dem umlaufenden Fördermittel und dem Beleg 3 sicherstellt.

Anstelle der mechanischen Ausrichtvorrichtung 89 in der Leseeinheit 1 ist es auch möglich, den Beleg 3 schiefwinkelig durch die Scannervorrichtung 25 hindurchlaufen zu lassen und eine einheitliche Bilddatengenerierung softwaremäßig zu realisieren bzw. den schiefwinkeligen Einlauf des Beleges 3 softwaremäßig zu kompensieren.

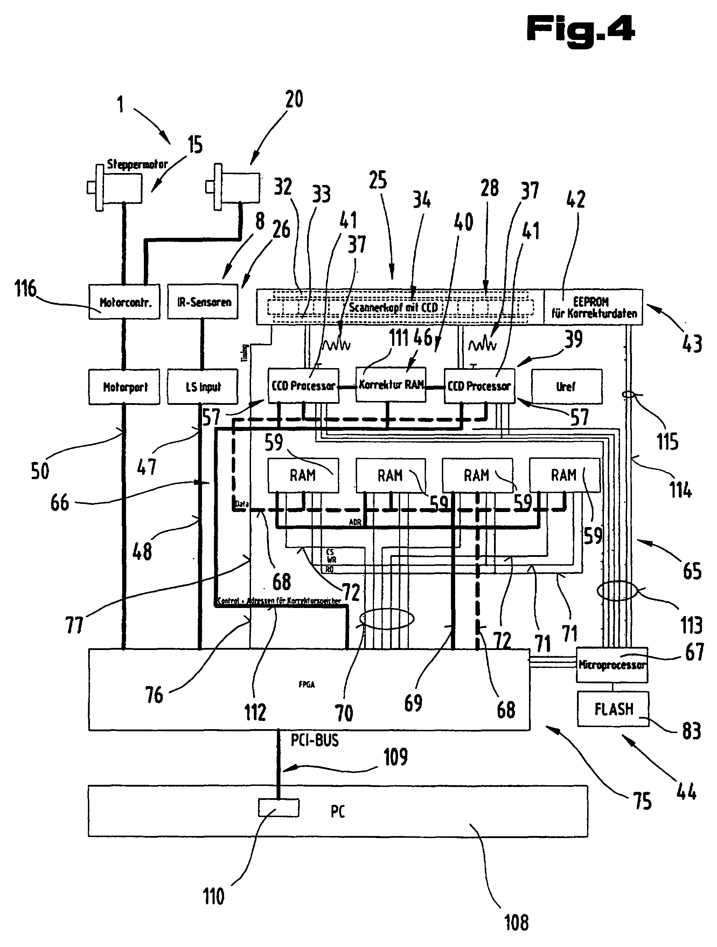

Fig. 4 zeigt ein anderes Ausführungsbeispiel der Scannerelektronik 65 für die Leseeinheit 1, wobei für vorhergehend bereits beschriebene Komponenten gleiche Bezugszeichen verwendet werden.

Diese Scannerelektronik 65 ist insbesondere für die schnelle Übertragung der eingelesenen Bilddaten eines Dokumentes bzw. Beleges direkt in den Zugriffsbereich eines Personal-Computers 108 ausgebildet. Insbesondere werden mittels dieser Scannerelektronik 65 die gelesenen Bilddaten des Beleges über den im Personal-Computer 108 eingesetzten PC-Bus 109 direkt in einen PC-Hauptspeicher 110 des Personal-Computer 108 übertragen.

Der Personal-Computer 108 ist zur weiteren Verarbeitung, Auswertung, Übertragung und/oder Einbindung der auf dem Beleg vorhandenen Daten in ein regionales Datennetzwerk, z.B. in ein Datennetzwerk des Lotteriewesens und/oder zur Visualisierung der von der Leseeinheit 1 generierten Bilddaten ausgebildet. Die grundlegenden, elektronischen Komponenten der Scannerelektronik 65, ausgenommen des Abtast- und Speichermoduls 43, sind bevorzugt auf einer Printplatte angeordnet, welche in einen freien Slot des Personal-Computers 108 gesteckt werden kann und somit direkt mit dem PC-Bus 109 in elektrischer Verbindung steht. Der PC-Bus 109 im Personalcomputer 108 ist dabei insbesondere durch einen PCI-Bus gebildet, über welchen der Mikroprozessor des Personal-Computers 108 Daten mit den peripheren Komponenten austauscht.

Hierbei umfaßt die Scannerelektronik 65 wiederum eine Korrekturschaltung 40 für den Abgleich der von der Scannervorrichtung 25 bereitgestellten Bilddaten. Die Korrekturschaltung umfaßt hierbei zumindest zwei Linearisierungs-Chips 41, die die von der Scannervorrichtung 25 bzw. vom optoelektrischen Wandler 34 abgegebenen analogen Bildsignale 37 verarbeiten. Die beiden Linearisierungs-Chips 41 stehen dabei mit der zusätzlichen Speichervorrichtung 46, welche insbesondere durch einen Korrekturdatenspeicher 111 aus RAM-Speicherbausteinen mit schnellem Zugriff gebildet ist, in Leitungsverbindung. Dieser den beiden Linearisierungs-Chips 41 der Ausgleichsvorrichtung 39 zugeordnete Korrekturdatenspeicher 111 dient der Zwischenspeicherung der von den Linearisierungs-Chips 41 zu verarbeitenden Korrekturdaten aus der ersten, insbesondere durch EEPROM-Speicherbausteine gebildeten Speichervorrichtung 42 im Scannerkopf. Die von der Scannervorrichtung 25 bzw. vom optoelektrischen Wandler 34 bereitgestellten Bilddaten werden bei diesem Ausführungsbeispiel also parallel von zumindest zwei Linearisierungs-Chips 41 aufgenommen und weiterverarbeitet, insbesondere werden dabei die der Leseeinheit 1 innewohnenden Toleranzen aufgehoben bzw. annulliert. Die Steuer- und/oder Auswertevorrichtung 44 dieser Scannerelektronik 65 ist insbesondere durch den Mikroprozessor 67 und durch die Ablaufkontrollvorrichtung 75 gebildet. Die eine zentrale Steuerfunktion der Leseeinheit 1 ausführende Ablaufkontrollvorrichtung 75 ist, insbesondere durch eine frei programmierbare Gatteranordnung bzw. durch zumindest einen FPGA-Baustein (Free Programmable Gate Array) gebildet. Die Ablaufkontrollvorrichtung 75 ist also durch einen fix programmierten Baustein gebildet, in welchem die entsprechende Ablauflogik hinterlegt ist und welcher die peripheren Komponenten der Leseeinheit 1 dementsprechend steuert.

Die Ablaufkontrollvorrichtung 75 ist dabei ebenso mit dem Mikroprozessor 67 der Scannerelektronik 65 leitungsverbunden.

Der Rechnerbus 66 der Scannerelektronik 65 umfaßt wiederum zumindest einen Datenbus 68, einen Adreßbus 69 und einen Steuerbus 70. Der Datenbus 68 verbindet dabei die Datenports der Linearisierungs-Chips 41 mit den entsprechenden Datenein-bzw. - ausgängen der Zwischenspeicher 59, welche insbesondere durch RAM-Speicherbausteine gebildet sind mit dem Datenport der Ablaufkontrollvorrichtung 75. Der Adreßbus 69 verbindet die Adreßports der Speicherbausteine des Zwischenspeichers 59 mit dem Adreßport der Ablaufkontrollvorrichtung 75. Der ebenfalls von der Ablaufkontrollvorrichtung 75 ausgehende Steuerbus 70 führt zu den Kontrolleingängen eines jeden Speicherbausteins des Zwischenspeichers 59 und weist hierbei zumindest eine Schreib-/Leseleitung 71, die den entsprechenden Speicherbaustein auf einen Schreiboder Lesevorgang einstellt und zumindest eine Wählleitung, bevorzugt jedoch je Speicherbaustein eine eigene Wählleitung 72, auf, die den anzusprechenden Speicherbaustein aktiv bzw. inaktiv schaltet.

Darüberhinaus weist die Scannerelektronik 65 zumindest einen weiteren Steuer- und Adreßbus 112 auf, der mit jedem der Linearisierungs-Chips 41 sowie mit dem den Linearisierungs-Chips 41 zugeordneten Korrekturdatenspeicher 111 elektrisch verbunden ist und seinen Ursprung ebenfalls an der Ablaufkontrollvorrichtung 75 aufweist. Der Steuer- und Adreßbus 112 kann dabei als kombinierter Steuer- und Adreßbus 112 ausgebildet sein, d.h. die Leitungen des Steuer- und Adreßbusses 112 werden zeitversetzt für die Übertragung von Steuer- und Adreßdaten verwendet. Weiters kann der Steuer- und Adreßbus 112 jeweils eigene Leitungen zur Übertragung von Steuer- und Adreßdaten aufweisen. Die Adreßleitungen des Steuer- und Adreßbus 112 sind dabei bevorzugt dem Korrekturdatenspeicher 111 für die Korrekturdaten zugeordnet.

Darüber hinaus sind die beiden Linearisierungs-Chips 41 über einen weiteren Steuerbus 113 mit dem Mikroprozessor 67 der Steuer- und/oder Auswertevorrichtung 44 leitungsverbunden. Dieser Steuerbus 113 weist zumindest zwei Steuerleitungen auf, wobei diese unter anderem zur Konfiguration bzw. Initialisierung der Linearisierungs-Chips 41 eingesetzt sind.

Die Linearisierungs-Chips 41 werden demnach einerseits über den Steuer- und Adreßbus 112 von der Ablaufkontrollvorrichtung 75 und andererseits über den Steuerbus 113 vom Mikroprozessor 67 gesteuert und/oder konfiguriert und/oder initialisiert und/oder kontrolliert.

Die Speichervorrichtung 42, welche die Korrekturdaten zur Annullierung der Toleranzen der Komponenten der Leseeinheit 1, insbesondere die Korrekturdaten für die Annullierung der dem Scannerkopf innewohnenden Toleranzen aufweist ist über zumindest eine Leitung 114, insbesondere über einen Datenbus 115 mit dem Mikroprozessor 67 leitungsverbunden.

Über diesen Datenbus 115 kann der Mikroprozessor 67 die in der Speichervorrichtung 42 hinterlegten Korrekturdaten auslesen und an die Korrekturschaltung 40, insbesondere an die weitere Speichervorrichtung 46 bzw. auch an die Ablaufkontrollvorrichtung 75 übergeben. Die erste Speichervorrichtung 42 ist dabei direkt der Scannervorrichtung 25 zugeordnet und bildet mit dieser ein weitgehend eigenständiges Modul mit vordefinierten Schnittstellen zu den weiteren Komponenten der Scannerelektronik 65. Die Korrekturdaten werden dabei zumindest bei jedem Hochlauf der Lesevorrichtung 1 seriell aus der ersten Speichervorrichtung 42 ausgelesen und in die weitere Speichervorrichtung 46 bzw. in den Korrekturdatenspeicher 111 übertragen auf welchem dann für die Linearisierungs-Chips 41 wesentlich rascherer, insbesondere paralleler Zugriff bei vergleichsweise hoher Datenübertragungsrate besteht.

Über zumindest eine Steuerleitung 76, 77 ist die Ablaufkontrollvorrichtung 75 mit der Scannervorrichtung 25 leitungsverbunden, um vor allem das Timing der Scannervorrichtung 25 entsprechend den Erfordernissen festlegen und kontrollieren zu können.

Ausgehend von der in den Abläufen fix programmierten Ablaufkontrollvorrichtung 75 sind die Detektionsvorrichtungen 8, 26 über zumindest eine Leitung 48 steuer- und abfragbar. Weiters sind die Antriebsvorrichtung 15, 20 und jegliche anderen elektromotorischen Antriebsvorrichtungen der Leseeinheit 1 über zumindest eine Leitung 50 mit der Ablaufkontrollvorrichtung 75 leitungsverbunden. Die Antriebsvorrichtungen 15, 20 sind bevorzugt durch Schrittmotoren gebildet, wodurch diesen zumindest eine Motorsteuervorrichtung 116 vorgeordnet ist.

Ein über die Leseeinheit 1 einzulesender Beleg wird nun über die Scannervorrichtung 25, welche insbesondere in Art eines Kontaktscanners 28 aufgebaut ist, optisch abgetastet. Die dabei generierten Bilddaten werden der Korrekturschaltung 40 mittels elektrischen Signalen in analoger Form übergeben. Die Korrekturschaltung 40 bzw. die Linearisierungs-Chips 41 lesen die Bilddaten ein und rechnen die toleranzbedingten Abweichungen der Leseeinheit 1 bzw. der Scannervorrichtung 25 weg. Die korrigierten, analogen Bildsignale werden dann über die Linearisierungs-Chips 41 in digitale Daten gewandelt und in digitaler Form temporär in den Zwischenspeichern 59 auf einer PCI-Buskarte des Personalcomputers 108 zwischengespeichert.

Mittels der komplexen Ablaufkontrollvorrichtung 75 werden die gerade gelesenen, korrigierten Bilddaten unmittelbar nach dem Erfassen einer Abtastzeile über den relativ schnellen PC-Bus 109, insbesondere über den PCI-Bus des Personal-Computers 108 direkt in den PC-Hauptspeicher 110 des Personal-Computers 108 übertragen. Die Datenübertragungsrate beträgt dabei mehr als 10 MB/s. Dadurch ist es möglich, daß der Scannvorgang und eine optische Zeichenerkennung (OCR) oder eine OMR (Optical Mark Recognition) weitgehend gleichzeitig ablaufen, wodurch eine beträchtliche Zeiteinsparung im Vergleich zu einer sequentiellen Lösung erreicht ist.

Die Korrekturdaten in der Speichervorrichtung 42 bzw. 46 berücksichtigen vor allem die unterschiedlichen, streuungsbedingten Empfindlichkeiten der einzelnen Abtastelemente des optoelektrischen Wandlers 34. Diese Korrekturdaten werden dabei bei der erstmaligen Initialisierung der Leseeinheit 1 mittels Istwertmessungen und Vergleich mit Sollwerten ermittelt und dauerhaft in der Speichervorrichtung 42 abgelegt, um nachfolgend eine möglichst exakte Annullierung dieser Toleranzen mittels den Linearisierungs-Chips 41 zu ermöglichen.

Wie insbesondere aus Fig. 1 ersichtlich ist, kann die Leseeinheit 1 auch eine Ausgabevorrichtung 105 zur Ausgabe bestimmter Daten aufweisen. Die Ausgabevorrichtung 105 ist dabei bevorzugt zum Aufbringen von Daten auf das Dokument 2 bzw. den Beleg 3 ausgebildet und kann z.B. durch eine Druckereinheit 106 und/oder durch eine Stempeleinheit 107 zur Indossierung des Beleges 3 gebildet sein, um bank- bzw. lotteriespezifische Daten möglichst dauerhaft auf den Beleg 3 aufbringen zu können. Der aufgebrachte Text bzw. die aufgebrachten Zeichen können nachfolgend von beliebigen Personen ohne Hilfsmittel gelesen werden. Die Klartextaufbringung auf den Beleg 3 über die Ausgabevorrichtung 105 kann dabei über eine Zeilendruckeinheit in Art eines Matrix-, Tinten- und/oder als Laserdruckers erfolgen. Die Druckereinheit 106 bzw. die Stempeleinheit 107 ist dabei mit der Steuer- und/oder Auswertevorrichtung 44 der Leseeinheit 1 und/oder mit dem übergeordneten Rechner 62 leitungsverbunden, um die von diesem empfangenen Daten möglichst im Klartext auf den Beleg 3 aufbringen zu können.

Bevorzugt ist die Ausgabevorrichtung 105 bezogen auf die übliche Zuführ- bzw. Transportrichtung - Pfeil 7 - vor der Scannervorrichtung 25 angeordnet. Wie in Fig. 1 dargestellt ist es aber auch möglich, die Ausgabevorrichtung 105 bezogen auf die übliche Zuführ- bzw. Transportvorrichtung - Pfeil 7 - nach der Scannervorrichtung 25 anzuordnen.

Der Transport des zu bedruckenden Beleges 3 erfolgt ebenso über die Transportvorrichtung 17, die eine Relativbewegung zwischen dem Beleg 3 und der Ausgabevorrichtung 105 ermöglicht. Im Anschluß an die optische Abtastung des Beleges 3 über die Scannervorrichtung 25 bzw. im Anschluß an die Bedruckung des Beleges 3 wird dieser über die Transportvorrichtung 17 entweder in einem Sammelbehälter bzw. in einem Stapelspeicher abgelegt oder aber auch an den jeweiligen Bediener der Leseeinheit 1 ausgegeben. Für die Ausgabe des Beleges 3 an den Besitzer des Beleges 3 bzw. an den Bediener der Leseeinheit 1 wird der Beleg 3 bevorzugt entgegen der üblichen Zuführ- bzw. Transportrichtung über die Transportvorrichtung 17 zurückbefördert und an der Zuführöffnung 4 zur Entnahme desselben bereitgestellt. Selbstverständlich ist es auch möglich, die Rückgabe des Beleges 3 durch eine Umlenkung in der Führungsvorrichtung 6 zu bewerkstelligen und den Beleg gegebenenfalls an einer separaten Ausgabestelle auszuwerfen.

Selbstverständlich ist es auch möglich, die Scannervorrichtung 25 zur Erfassung von Farbinformationen auszubilden. Hierzu können entweder mehrere Scannervorrichtungen 25 zur Erfassung jeweils unterschiedlicher Farben, bezogen auf die übliche Transport- bzw. Zuführrichtung - Pfeil 7 -, nacheinander angeordnet sein bzw. kann auch eine kombinierte Scannervorrichtung 25 angeordnet sein, welche zumindest zur Erfassung der drei Grundfarben Rot, Grün und Blau ausgebildet ist, angeordnet sein.

Darüber hinaus besteht die Möglichkeit, einen optoelektrischen Wandler 34 bzw. CCD-Chip mit selektiv wählbarer Rot-, Grün- und Blaubeleuchtung anzuordnen und die einzelnen Scannvorgänge bei unterschiedlicher, farblicher Beleuchtung sequentiell auszuführen und die jeweiligen Farbinformationen somit von dieser einen Scannvorrichtung 25 nacheinander aufzunehmen. Der Mehrfachdurchlauf des Beleges 3 durch die Scannervorrichtung 25 ist dabei über eine Transportvorrichtung 17 mit umschaltbarer bzw. bidirektionaler Transportrichtung ermöglicht.

Weiters ist es möglich, einen optoelektrischen Wandler 34 bzw. CCD-Chip anzuordnen, welchem Leuchtmittel bzw. Lichtquellen 32, 33 zur Abstrahlung von weißem Licht zugeordnet sind und welcher zur direkten Erfassung von Farbinformationen ausgebildet ist, wodurch vergleichsweise kurze Durchlauf- bzw. Erfassungszeiten erreicht werden.

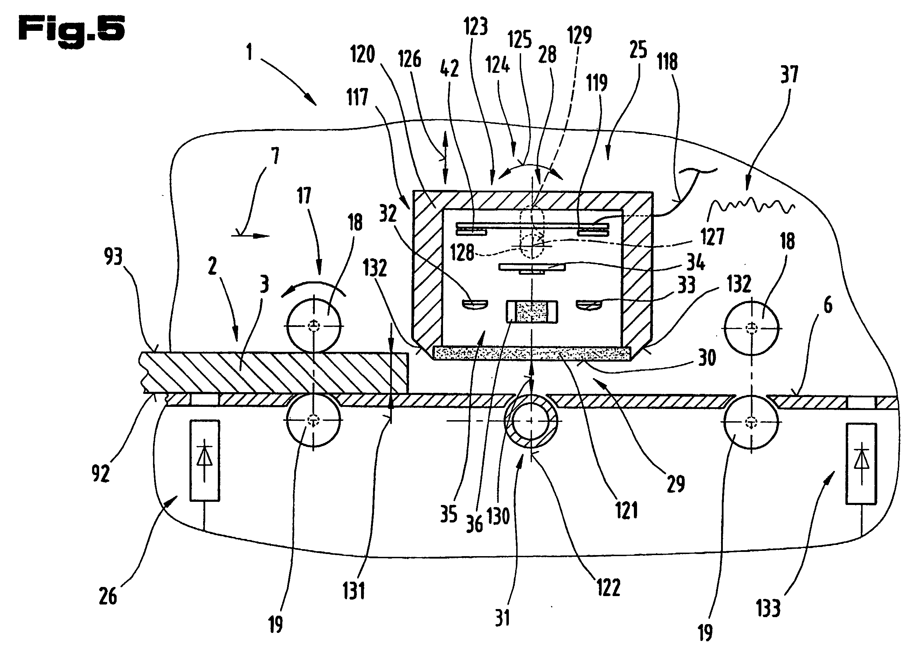

Fig. 5 zeigt eine Detailausbildung der erfindungsgemäßen Leseeinheit 1, wobei für vorhergehend bereits beschriebene Teile gleiche Bezugszeichen verwendet werden.

Insbesondere ist in Fig. 5 ein im unmittelbaren Abtastbereich der Scannervorrichtung 25 befindlicher Beleg 3 gezeigt. Bezogen auf die übliche Zuführ- bzw. Transportrichtung - gemäß Pfeil 7 - befindet sich der Beleg 3 unmittelbar vor einem Scannerkopf 117 der Scannervorrichtung 25.

Der Beleg 3 ist dabei über die Transportvorrichtung 17 relativ zur Scannervorrichtung 25 bewegbar. Bevorzugt befördert die Transportvorrichtung 17 den Beleg 3 relativ zum ortsfest gelagerten Scannerkopf 117. Selbstverständlich ist es jedoch auch möglich, den Scannerkopf 117 bzw. die Scannervorrichtung 25 über die Transportvorrichtung 17 relativ zu einem feststehenden Beleg 3 zu bewegen.

Die Transportvorrichtung 17 umfaßt bevorzugt elektromotorisch antreibbare Antriebsund/oder Transportrollen bzw. Walzen, die mit zumindest einer Flachseite 92, 93 des einzulesenden Beleges 3 in reibschlüssiger Verbindung stehen um einen sicheren Vortrieb zu gewährleisten. Bevorzugt sind die Antriebs- und/oder Transportrollen 18, 19, ausgenommen der Andrückvorrichtung 31, durch mehrere im Abstand zueinander angeordnete und auf einer gemeinsamen Drehachse angeordnete, kreisrunde Scheiben gebildet, sodaß immer nur Teilbereiche des Beleges 3 mit der Oberfläche der Antriebsund/oder Transportrollen 18, 19 kontaktiert sind. Insbesondere besteht durch die vorhergehend beschriebene Ausbildung der Antriebs- und/oder Transportrollen 18, 19 nur in bestimmten, quer zur Transportrichtung - Pfeil 7 - verlaufenden Abständen ein Kontakt mit dem Beleg 3, sodaß Faltenbildungen möglichst verhindert sind.

Der Scannerkopf 117 für die optoelektrische Abtastung des Beleges 3 ist modulartig als eine im wesentlichen eigenständige Baueinheit mit vorbestimmten Schnittstellen zu den peripheren Einheiten der Leseeinheit 1, insbesondere der Scannelektronik 65 ausgebildet. Die Verbindungsmittel zwischen der Scannervorrichtung 25 bzw. dem Scannerkopf 117 und den vorerwähnten peripheren, elektronischen Komponenten sind insbesondere durch Kabel 118, wie z.B. Flachbandkabel gebildet.

Die Scannervorrichtung 25 bzw. der Scannerkopf 117 umfaßt insbesondere die Lichtquellen 32, 33, die Linsenanordnung 35, den optoelektrischen Wandler 34 und zumindest eine Scannerkopfprintplatte 119 mit der Speichervorrichtung 42 für die Korrekturdaten. Die zuvor erwähnten elektrischen, optoelektrischen und optischen Komponenten der Scannervorrichtung 25 sind in einem gehäuseartigen Aufnahmerahmen 120 gehaltert. Dieser Aufnahmerahmen 120 weist im Querschnitt - gemäß Fig. 5 - bevorzugt einen, im wesentlichen U-förmigen Querschnitt auf, wobei in dem von den Schenkeln und der Basisplatte umschlossenen Raum die vorerwähnten Komponenten angeordnet sind. Der Innenraum des im wesentlichen U-förmigen Aufnahmerahmens 120 ist durch eine an den Schenkeln anliegende, transparente Abdeckplatte 121, welche bevorzugt aus Glas gebildet ist, vom Umgebungsbereich abgeschlossen.

Bezogen auf die Zuführ- bzw. Transportrichtung - gemäß Pfeil 7 - des Beleges 2 sind die zeilenförmig ausgebildeten Lichtquellen 32, 33, die bevorzugt durch LED-Leisten gebildet sind, vor und nach dem optoelektrischen Wandler 34 angeordnet, sodaß der Beleg 3, bezogen auf den optoelektrischen Wandler 34, beidseitig beleuchtet ist und somit Lichtreflexionen auf der rauhen Papieroberfläche vermieden werden.

Die transparente Abdeckplatte 121 steht beim Einlesevorgang mit der abzutastenden Flachseite 93 des Beleges im größtmöglichen Kontakt, wodurch Luftspaltbildungen zwischen der transparenten Abdeckplatte 121 und der oberen Flachseite 93 weitgehend ausgeschlossen sind. Die Mittelachsen des optoelektronischen Wandlers 34, der Linsenanordnung 35 sowie die Drehachse der insbesondere als Antriebswalze ausgebildeten Andrückvorrichtung 31 liegen dabei auf einer gemeinsamen Vertikalachse 122. Diese Vertikalachse 122 stellt also eine Symmetrieachse des optoelektrischen Wandlers 34 bzw. des CCD-Chips, der Linsenanordnung 35 und der Andrückvorrichtung 31 dar. Bevorzugt sind auch die beiden stabförmig ausgebildeten Lichtquellen 32, 33 symmetrisch zu dieser Vertikalachse 122 angeordnet. Wie vorhergehend bereits erwähnt ist die Andrückvorrichtung 31 bevorzugt durch eine angetriebene bzw. zur Transportvorrichtung 17 zählende Walze gebildet, welche bevorzugt in etwa über die gesamte Breite des Beleges 3 einen nachgiebigen bzw. federelastischen Mantelbereich, insbesondere aus Schaumstoff aufweist.

Weiters ist die Scannervorrichtung 25 bzw. der Scannerkopf 117 in der Leseeinheit 1 über eine Lagervorrichtung 123 translatorisch und/oder rotatorisch gelagert. Die Lagervorrichtung 123 umfaßt hierfür eine Gelenks- und/oder Führungsvorrichtung 124, die die Scannervorrichtung 25 bzw. den Scannerkopf 117 rotatorisch und/oder translatorisch gemäß den Pfeilen 125 und 126 lagert.

Die Gelenks- und/oder Führungsvorrichtung 124 ermöglicht eine Verstellung des Scannerkopfes 117 in Vertikalrichtung relativ zur Führungsvorrichtung 6 bzw. zur Führungsbahn für den Beleg 3 und eine Verschwenkung um eine quer zur Transportrichtung und im wesentlichen parallel zu den Flachseiten 92, 93 verlaufende Schwenkachse 127. Der Aufnahmerahmen 120 weist hierfür zumindest einen Lagerzapfen 128 mit kreisförmigem Querschnitt auf, welcher in einer als Langloch ausgebildeten Vertikalführung 129 eingesetzt ist. Somit ist eine Verschwenkung des Scannerkopfes 117 bzw. des Aufnahmerahmens 120 - gemäß Pfeil 125 - um die Schwenkachse 127 und gleichzeitig eine translatorische Verschiebung desselben über die Vertikalführung 129 - gemäß Pfeil 126 - möglich. Die Schwenkachse 127 des Lagerzapfens 128 sowie die Längsmittelachse der langlochartigen Vertikalführung 129 liegen dabei ebenso auf der Vertikalachse 122.

Bevorzugt ist der Lagerzapfen 121 am Aufnahmerahmen 120 angeformt und in einer in den mechanischen Teilen der Leseeinheit 1 eingearbeiteten Vertikalführung 129 gelagert. Selbstverständlich ist es auch möglich, die Vertikalführung 129 dem Aufnahmerahmen 120 zuzuordnen und den Lagerzapfen 128 an den mechanischen Teilen der Führungsvorrichtung 6 bzw. der Leseeinheit 1 vorzusehen.

Ein Abstand 130 zwischen der Auflagefläche bzw. Auflagelinie für den Beleg 3 auf der Andrückvorrichtung 31 bzw. auf der Führungsvorrichtung 6 und der Anlagefläche 30 des Scannerkopfes 117 auf der oberen Flachseite 93 des Beleges 3 ist dabei gleich bzw. geringfügig kleiner als eine übliche Dicke 131 der einzulesenden Belege 3. Damit wird erreicht, daß der Scannerkopf 117 satt auf der oberen Flachseite 93 des Beleges 3 anliegt und somit einen innigen Kontakt mit dem Beleg 3 sicherstellt. Die rotatorische und/oder translatorische Lagerung des Scannerkopfes 117 erlaubt dabei ein problemloses Einlaufen des Beleges 3 unterhalb der Scannervorrichtung 25, ohne daß dabei Stauungen bzw. Störungen beim Einlaufen des Beleges 3 auftreten können.

Bevorzugt weist der Scannerkopf 117 für einen problemlosen Ein- und Auslauf des Beleges 3 in bzw. aus dem Abtastbereich zumindest eine abgeschrägte Leitbahn 132 auf. Die Leitbahnen 132 können dabei durch den Aufnahmerahmen 120 selbst oder durch eigenständige Leitflächen gebildet sein.

Weiters ist aus Fig. 5 ersichtlich, daß die Scannervorrichtung 25 mit dem optoelektrischen Wandler 34 bevorzugt der oberen Flachseite 93 des Beleges 3 zugewandt ist und die Leuchtmittel 32, 33 ihr Licht in Richtung auf diese obere Flachseite 93 abstrahlen. Die bevorzugt aus einer Vielzahl von Leuchtdioden oder aus einer Leuchtdiode mit einem Lichtdiffusor über die Scannbreite bestehenden Leuchtmittel 32, 33 sind dabei bezogen auf die übliche Zuführ- bzw. Transportrichtung - Pfeil 7 - des Beleges 3 jeweils vor und nach dem optoelektrischen Wandler 34 angeordnet. Weiters ist ersichtlich, daß das von den Lichtquellen 32, 33 abgestrahlte und von der Flachseite 93 des Beleges 3 refraktierte Licht über die Linsenanordnung 35, insbesondere über die Gradientenlinse 36 auf dem optoelektrischen Wandler 34 mit den einzelnen optoelektrischen Elementen abgebildet wird.

Die Detektionsvorrichtung 26 zur Detektierung eines einlaufenden Beleges 3 in den Scannerbereich kann - wie schematisch dargestellt - auch durch einen Reflektionslichtschranken gebildet sein. Darüber hinaus kann auch eine Detektionsvorrichtung 133 zur Erfassung eines den Scannerbereich verlassenden Beleges 3 angeordnet sein.

Zur stabilen Lagerung des Scannerkopfes 117 in der Lagervorrichtung 123 liegt dessen Schwerpunkt 117 bevorzugt unterhalb der durch den Lagerzapfen 128 gebildeten Schwenkachse 127.

Die Scannervorrichtung 25 bzw. der Scannerkopf 117 ist mittels dem Aufnahmegehäuse 120 und der Abdeckplatte 121 staubdicht jedoch durchlässig für Luftfeuchtigkeit ausgebildet, sodaß Verunreinigungen im Innenbereich aber auch Kondensatprobleme weitgehend vermieden sind.

Der Ordnung halber sei abschließend darauf hingewiesen, daß zum besseren Verständnis des Aufbaus der Leseeinheit bzw. Scannerelektronik diese bzw. deren Bestandteile teilweise unmaßstäblich und/oder vergrößert und/oder verkleinert bzw. stark vereinfacht dargestellt wurden.

### Bezugszeichenaufstellung

- 1: Leseeinheit
- 2: Dokument
- 3: Beleg
- 4: Zuführöffnung
- 5: Gehäuseteil

- 6: Führungsvorrichtung
- 7: Pfeil
- 8: Detektionsvorrichtung
- 9: Infrarotlichtschranke
- 10: Sperr- und Freigabevorrichtung

- 11: Shutter
- 12: Welle
- 13: Durchbruch
- 14: Achse
- 15: Antriebsvorrichtung

- 16: Elektromotor
- 17: Transportvorrichtung
- 18: Antriebsrolle
- 19: Transportrolle
- 20: Antriebsvorrichtung

- 21: Elektromotor
- 22: Umsetzvorrichtung
- 23: Getriebeeinheit
- 24: Abstand
- 25: Scannervorrichtung

- 26: Detektionsvorrichtung
- 27: Infrarotlichtschranke
- 28: Kontaktscanner
- 29: Oberflächenbereich
- 30: Anlagefläche

- 31: Andrückvorrichtung
- 32: Lichtquelle
- 33: Lichtquelle
- 34: Wandler (optoelektrisch)
- 35: Linsenanordnung

- 36: Gradientenlinse
- 37: Bildsignal
- 38: Analogsignal
- 39: Ausgleichsvorrichtung
- 40: Korrekturschaltung

- 41: Linearisierungs-Chip
- 42: Speichervorrichtung
- 43: Abtast- und Speichermodul
- 44: Steuer- und/oder Auswertevorrichtung
- 45: Mikrokontroller

- 46: Speichervorrichtung
- 47: Leitung
- 48: Leitung
- 49: Leitung
- 50: Leitung

- 51: Leitung
- 52: Umsetzvorrichtung
- 53: Digital/Analog-Wandler
- 54: Korrektursignal
- 55: Überlagerungsstelle

- 56: Bildsignal
- 57: Umsetzvorrichtung
- 58: Analog/Digital-Wandler
- 59: Zwischenspeicher
- 60: Schieberegister

- 61: Schnittstelle
- 62: Rechner
- 63: Personal-Computer
- 64: Bussystem
- 65: Scannerelektronik

- 66: Rechnerbus
- 67: Mikroprozessor
- 68: Datenbus
- 69: Adreßbus
- 70: Steuerbus

- 71: Schreib-/Leseleitung
- 72: Wählleitung
- 73: Pufferspeicher
- 74: Pufferspeicher
- 75: Ablaufkontrollvorrichtung

- 76: Steuerleitung
- 77: Steuerleitung
- 78: Steuerleitung
- 79: Steuerleitung
- 80: Steuerleitung

- 81: Steuerleitung
- 82: Steuerleitung
- 83: Datenspeicher
- 84: Umsetzvorrichtung
- 85: Umsetzvorrichtung

- 86: Drehachse
- 87: Gelenksanordnung
- 88: Verstell- und Arretiervorrichtung
- 89: Ausrichtvorrichtung
- 90: Mittelachse

- 91: Längsmittelachse
- 92: Flachseite
- 93: Flachseite
- 94: Verstellvorrichtung
- 95: Antriebsmittel

- 96: Querfördervorrichtung
- 97: Querfördermittel
- 98: Querförderrolle
- 99: Drehachse
- 100: Antriebsmittel

- 101: Anschlagelement
- 102: Seitenkante
- 103: Anschlagfläche
- 104: Förderband
- 105: Ausgabevorrichtung

- 106: Druckereinheit
- 107: Stempeleinheit
- 108: Personal-Computer
- 109: PC-Bus
- 110: PC-Hauptspeicher

- 111: Korrekturdatenspeicher
- 112: Steuer- und Adreßbus
- 113: Steuerbus
- 114: Leitung
- 115: Datenbus

- 116: Motorsteuervorrichtung
- 117: Scannerkopf
- 118: Kabel
- 119: Scannerkopfprintplatte
- 120: Aufnahmerahmen

- 121: Abdeckplatte
- 122: Vertikalachse
- 123: Lagervorrichtung
- 124: Gelenks- und/oder Führungsvorrichtung
- 125: Pfeil

- 126: Pfeil
- 127: Schwenkachse
- 128: Lagerzapfen
- 129: Vertikalführung
- 130: Abstand

- 131: Dicke
- 132: Leitbahn
- 133: Detektionsvorrichtung

## Patentansprüche

1. Leseeinheit für ein Dokument, mit einer Steuer- und/oder Auswertevorrichtung (44) und mit einer Scannervorrichtung (25) zum Lesen des Dokumentes, mit einer Führungsvorrichtung für das Dokument und mit einer Transportvorrichtung (17) für die Relativverstellung zwischen Dokument und Scannervorrichtung, wobei die Steuerund/oder Auswertevorrichtung eine Ausgleichsvorrichtung (39) mit Korrekturwerten für die Korrektur der von einem optoelektrischen Wandler der Scannervorrichtung abgehenden Bildsignale in Echtzeit aufweist und die für den optoelektronischen Wandler (34) jeweils individuellen Korrekturwerte zumindest durch Vergleich von Sollwerten eines Referenzdokumentes mit den vom optoelektrischen Wandler abgegebenen Istwerten der Bildsignale des Referenzdokumentes ermittelt und in einer ersten Speichervorrichtung (42) dauerhaft hinterlegt sind, **dadurch gekennzeichnet, daß** die erste Speichervorrichtung (42) für die Korrekturwerte direkt an einem Scannerkopf (117) der Scannervorrichtung (25) und/oder am optoelektrischen Wandler (34) angeordnet ist und mit diesem ein einstückiges Bauteil mit vordefinierten Schnittstellen zu den peripheren, elektronischen Komponenten, insbesondere zu einer Scannerelektronik (65) bildet und die Steuer- und/oder Auswertevorrichtung (44) zumindest bei jeder Hochlaufphase zur Übertragung der Korrekturdaten von der ersten nicht flüchtigen Speichervorrichtung (42) in eine weitere Speichervorrichtung (46) der Steuerund/oder Auswertevorrichtung (44) ausgebildet ist und diese weitere Speichervorrichtung (46) eine im Vergleich zur ersten Speichervorrichtung (42) raschere Zugriffsmöglichkeit und höhere Datenübertragungsrate aufweist.

2. Leseeinheit nach Anspruch 1, **dadurch gekennzeichnet, daß** die Ausgleichsvorrichtung (39) zum Überlagern des Bildsignals (37) mit einem den Korrekturwerten in der weiteren Speichervorrichtung (46) entsprechenden Korrektursignal (54) ausgebildet ist.

3. Leseeinheit nach Anspruch 1 oder 2, **dadurch gekennzeichnet, daß** die Ausgleichsvorrichtung (39) zumindest einen Linearisierungs-Chip (41) aufweist, der mit der weiteren Speichervorrichtung (46) für die Korrekturwerte sowie mit der Scannervorrichtung (25) leitungsverbunden ist und zur Einbindung der verfügbaren Korrekturwerte in das von der Scannervorrichtung (25) eingehende, analoge Bildsignal (37) ausgebildet ist, sodaß ein korrigiertes Bildsignal (56) resultiert.

4. Leseeinheit nach Anspruch 3, **dadurch gekennzeichnet, daß** die Linearisierungs-Chips (41) der Ausgleichsvorrichtung (39) das korrigierte, analoge Bildsignal (56) ausgangsseitig als digitale Bilddaten ausgeben.

5. Leseeinheit nach Anspruch 3 oder 4, **dadurch gekennzeichnet, daß** die Linearisierungs-Chips (41) zur Weiterleitung der korrigierten, digitalen Bilddaten über einen Rechnerbus (66) an die Steuer- und/oder Auswertevorrichtung (44) ausgebildet sind.

6. Leseeinheit nach Anspruch 5, **dadurch gekennzeichnet, daß** die Linearisierungs-Chips (41) zur Übergabe der korrigierten, analogen Bilddaten des Dokumentes (2) über den Rechnerbus (66) an einen Zwischenspeicher (59) der Steuerund/oder Auswertevorrichtung (44) ausgebildet sind.

7. Leseeinheit nach Anspruch 6, **dadurch gekennzeichnet, daß** der Zwischenspeicher (59) über einen Datenbus (68) des Rechnerbusses (66) mit der Steuerund/oder Auswertevorrichtung (44) leitungsverbunden ist.

8. Leseeinheit nach Anspruch 7, **dadurch gekennzeichnet, daß** der über den Datenbus (68) mit den Linearisierungs-Chips (41) sowie mit der Steuer- und/oder Auswertevorrichtung (44) leitungsverbundene Zwischenspeicher (59) für die korrigierten, digitalen Bilddaten durch mehrere Schieberegister (60) gebildet ist.

9. Leseeinheit nach Anspruch 7 oder 8, **dadurch gekennzeichnet, daß** der Datenbus (68) unter Zwischenschaltung eines Pufferspeichers (74) mit der Speichervorrichtung (42) sowie mit dem Linearisierungs-Chip (41) verbunden ist.

10. Leseeinheit nach einem oder mehreren der Ansprüche 5 bis 7, **dadurch gekennzeichnet, daß** ein Adreßbus (69) des Rechnerbusses (66) unter Zwischenschaltung eines weiteren Pufferspeichers (73) mit dem Adreßport der Speichervorrichtung (46) verbunden ist.

11. Leseeinheit nach einem oder mehreren der vorhergehenden Ansprüche, **dadurch gekennzeichnet, daß** die Steuer- und/oder Auswertevorrichtung (44) durch einen Mikroprozessor (67) und durch eine Ablaufkontrollvorrichtung (75) gebildet ist.

12. Leseeinheit nach einem oder mehreren der vorhergehenden Ansprüche, **dadurch gekennzeichnet, daß** die Steuer- und/oder Auswertevorrichtung (44) zur Weiterleitung der gelesenen, korrigierten Bilddaten an einen übergeordneten Rechner (62) ausgebildet ist.

13. Leseeinheit nach einem oder mehreren der Ansprüche 6 bis 12, **dadurch gekennzeichnet, daß** die Steuer- und/oder Auswertevorrichtung (44), der Zwischenspeicher (59) und die Ausgleichsvorrichtung (39) auf einer die Scannerelektronik (65) für die Leseeinheit (1) bildenden Printplatte angeordnet sind, die über vorbestimmte Schnittstellen mit der Scannervorrichtung (25) leitungsverbunden ist.

14. Leseeinheit nach einem oder mehreren der vorhergehenden Ansprüche, **dadurch gekennzeichnet, daß** eine Schnittstelle (61) zwischen der Steuer- und/oder Auswertevorrichtung (44) der Leseeinheit (1) und einem übergeordneten Rechner (62) durch eine Centronics-Parallelschnittstelle oder durch eine USB-Schnittstelle gebildet ist.

15. Leseeinheit nach Anspruch 13, **dadurch gekennzeichnet, daß** die Scannervorrichtung (25) eine eigenständige, modulartige Baueinheit bildet, die über zumindest eine Leitungsverbindung, insbesondere über ein Kabel (118) mit der Scannerelektronik (65) leitungsverbunden ist.

16. Leseeinheit nach einem oder mehreren der vorhergehenden Ansprüche, **dadurch gekennzeichnet, daß** die Scannervorrichtung (25) als Scannerkopf (117) ausgebildet ist, welcher sich quer zur Zuführ- bzw. Transportrichtung (Pfeil (7)) des Dokumentes (2) über den Bereich der Abtastzone erstreckt.

17. Leseeinheit nach Anspruch 16, **dadurch gekennzeichnet, daß** der Scannerkopf (117) einen Aufnahmerahmen (120) aufweist, welcher zumindest einen optoelektrischen Wandler (34), zumindest eine Lichtquelle (32, 33) und eine Linsenanordnung (35) haltert.

18. Leseeinheit nach einem oder mehreren der vorhergehenden Ansprüche, **dadurch gekennzeichnet, daß** zumindest zwei als Lichtleisten ausgebildete Lichtquellen (32, 33) angeordnet sind, die ihr Licht in Richtung auf eine abzutastende Flachseite (92, 93) des Dokumentes (2) abstrahlen.

19. Leseeinheit nach einem oder mehreren der vorhergehenden Ansprüche, **dadurch gekennzeichnet, daß** der optoelektrische Wandler (34) mittels einer Vielzahl von optoelektrischen Elementen zur Umwandlung des von der jeweiligen Flachseite (92, 93) refraktierten Lichtes in das die Lichtverhältnisse am optoelektrischen Wandler (34) repräsentierende Bildsignal (37) ausgebildet ist.

20. Leseeinheit nach Anspruch 17, **dadurch gekennzeichnet, daß** die Linsenanordnung (35) durch eine Vielzahl von Gradientenlinsen (36) gebildet ist, welche bezogen auf eine Vertikalrichtung zwischen der optisch abzutastenden Flachseite (92, 93) und dem als CCD-Element ausgebildeten optoelektrischen Wandler (34) angeordnet ist und das von einem Dokument (2) refraktierte Licht auf den einzelnen optoelektrischen Elementen desselben abbilden.

21. Leseeinheit nach Anspruch 17 oder 18, **dadurch gekennzeichnet, daß** die bevorzugt als LED-Leisten ausgebildeten Lichtquellen (32, 33) bezogen auf die Zuführ- bzw. Transportrichtung (Pfeil (7)) vor und nach dem optoelektrischen Wandler (34) angeordnet sind, sodaß der optoelektrische Wandler (34) zwischen zumindest zwei solcher leistenartiger Lichtquellen (32, 33) angeordnet ist.

22. Leseeinheit nach Anspruch 17, **dadurch gekennzeichnet, daß** die optischen, elektrischen und/oder optoelektrischen Komponenten der Scannervorrichtung (25) mittels einer transparenten Abdeckplatte (121) auf dem Aufnahmerahmen (120) staubdicht vom Umgebungsbereich abgeschlossen sind.

23. Leseeinheit nach Anspruch 22, **dadurch gekennzeichnet, daß** die bevorzugt aus Glas gebildete, transparente Abdeckplatte (121) während dem Scannvorgang mit der abzutastenden Flachseite (92, 93) eines Dokumentes (2) kontaktiert ist.

24. Leseeinheit nach Anspruch 22 oder 23, **dadurch gekennzeichnet, daß** eine Andrückvorrichtung (31), welche bevorzugt als drehbar gelagerte Walze ausgebildet ist, ein einzulesendes Dokument (2) lückenlos bzw. vollständig gegen eine Anlagefläche (30) der Abdeckplatte (121) drückt.

25. Leseeinheit nach Anspruch 24, **dadurch gekennzeichnet, daß** eine Drehachse der als Andrückwalze ausgebildeten Andrückvorrichtung (31) und eine Mittelachse der Gradientenlinse (36) und/oder des optoelektrischen Wandlers (34) auf einer gemeinsamen Vertikalachse (122) liegen.

26. Leseeinheit nach Anspruch 25, **dadurch gekennzeichnet, daß** die Drehachse der Andrückvorrichtung (31) parallel zur Längsmittelachse der aus einer Vielzahl von Linsen bestehenden Linsenanordnung (35) und/oder parallel zu einer Mittelachse (90) des als Zeilen-CCD ausgebildeten optoelektronischen Wandlers (34) verläuft.

27. Leseeinheit nach einem oder mehreren der vorhergehenden Ansprüche, **dadurch gekennzeichnet, daß** die Scannervorrichtung (25), insbesondere der Scannerkopf (117) über eine Lagervorrichtung (123) translatorisch und/oder rotatorisch in der Leseeinheit (1) gelagert ist.

28. Leseeinheit nach einem Anspruch 27, **dadurch gekennzeichnet, daß** die Lagervorrichtung (123) eine Gelenks- und/oder Führungsvorrichtung (124) ausbildet, die die Scannervorrichtung (25) rotatorisch um eine parallel zu den Flachseiten (92, 93) des Dokumentes (2) verlaufende Schwenkachse (127) lagert.

29. Leseeinheit nach Anspruch 16 oder 17, **dadurch gekennzeichnet, daß** der Scannerkopf (117) in einer Vertikalführung (129) senkrecht zur Schwenkachse (127) verstellbar gelagert ist.

30. Leseeinheit nach einem oder mehreren der vorhergehenden Ansprüche, **dadurch gekennzeichnet, daß** die Transportvorrichtung (17) eine Mehrzahl von elektromotorisch antreibbaren Antriebs- und/oder Transportrollen (18, 19) aufweist, die ein Dokument (2) entlang einer vorgesehenen Führungsbahn (6) innerhalb der Leseeinheit (1) führen und befördern.

31. Leseeinheit nach einem oder mehreren der vorhergehenden Ansprüche, **dadurch gekennzeichnet, daß** bezogen auf die Zuführ- bzw. Transportrichtung (Pfeil (7)) vor der Scannervorrichtung (25) eine Ausrichtvorrichtung (89) zur Herstellung einer einheitlichen Orientierung schiefwinkelig einlaufender Dokumente (2) angeordnet ist.

32. Leseeinheit nach Anspruch 31, **dadurch gekennzeichnet, daß** die Ausrichtvorrichtung (89) eine Querfördervorrichtung (96) zur Querförderung der einzulesenden Dokumente (2) bis zu einer parallel zur üblichen Zuführ- bzw. Transportrichtung (Pfeil (7)) ausgerichteten Anschlagfläche (103) aufweist.

33. Leseeinheit nach einem oder mehreren der Ansprüche 17, 18 oder 21, **dadurch gekennzeichnet, daß** die Lichtquellen (32, 33) zur Abstrahlung von weißem oder davon unterschiedlichem Licht, bevorzugt zur Abstrahlung von rotem Licht ausgebildet sind, um Darstellungen dementsprechender Farbe auf dem Dokument (2) auszublenden.

34. Leseeinheit nach einem oder mehreren der vorhergehenden Ansprüche, **dadurch gekennzeichnet, daß** die Steuer- und/oder Auswertevorrichtung (44) mit einer in der Leseeinheit (1) angeordneten Ausgabevorrichtung (105) leitungsverbunden ist.

35. Leseeinheit nach Anspruch 34, **dadurch gekennzeichnet, daß** die Ausgabevorrichtung (105) zur dauerhaften Anbringung von Zeichen auf dem Dokument (2) ausgebildet ist und durch eine Druckereinheit (106) oder eine Stempeleinheit (107) gebildet ist.

36. Leseeinheit nach einem oder mehreren der vorhergehenden Ansprüche, **dadurch gekennzeichnet, daß** sie in einem Bank- und/oder Lotterieterminal eingesetzt ist und Detektionseinrichtungen (8, 26) und/oder Sperr- und/oder Freigabevorrichtungen (10), insbesondere Shutter (11) für Dokumente (2) aufweist.

## Claims

1. Reading unit (1) for a document (2) with a control and/or evaluation system (44) and a scanner device (25) for reading the document, having a guide mechanism for the document and a feed mechanism (17) for producing a relative displacement between document and scanner device, in which the control and/or evaluation system has a correction system (39) with correction values to correct the image signals emitted from an opto-electrical transformer (34) of the scanner device (25) in real time, and the individual correction values for the opto-electronic transformer (34) are respectively determined at least by comparing desired values of a reference document with the actual values of the image signals (37; 56) of the reference document detected by the opto-electrical transformer and are permanently stored in a first memory system (42), **characterised in that** the first memory system (42) for the correction values is provided directly on a scanner head (117) of the scanner device (25) and/or on the opto-electrical transformer (34) and forms an integral component therewith, having predefined interfaces to the peripheral electronic components, in particular to scanner electronics (65), and the control and/or evaluation system (44) is programmed to transfer correction data from the first non-volatile memory system (42) into another memory system (46) of the control and/or evaluation unit (44), at least during every run-up phase, and this other memory system (46) has a more rapid accessing capability and a higher data transmission rate than the first memory system (42).

2. Reading unit as claimed in claim 1, **characterised in that** the correction system (39) is programmed to superimpose a correction signal (54) corresponding to the correction values in the other memory system (46) on the image signal (37).

3. Reading unit as claimed in claim 1 or 2, **characterised in that** the correction system (39) has at least one linearization chip (41), which is hard-wired to the other memory system (46) for the correction values and to the scanner device (25) and is programmed to incorporate the available correction values in the incoming analogue image signal (37) from the scanner device (25) so that a corrected image signal (56) is generated.

4. Reading unit as claimed in claim 3, **characterised in that** the linearization chip (41) of the correction system (39) outputs the corrected, analogue image signal (56) on the output side as digital image data.

5. Reading unit as claimed in claim 3 or 4, **characterised in that** the linearization chip (41) is programmed to forward the corrected, digital image data via a computer bus (66) to the control and/or evaluation system (44).

6. Reading unit as claimed in claim 5, **characterised in that** the linearization chip (41) is programmed to transfer the corrected, analogue image data of the document (2) via the computer bus (66) to a temporary memory (59) of the control and/or evaluation system (44).

7. Reading unit as claimed in claim 6, **characterised in that** the temporary memory (59) is wired via a data bus (68) of the computer bus (66) to the control and/or evaluation unit (44).

8. Reading unit as claimed in claim 7, **characterised in that** the temporary memory (59) for the corrected, digital image data, wired via the data bus (68) to the linearization chip (41) and the control and/or evaluation unit (44), is made up of several shift registers (60).

9. Reading unit as claimed in claim 7 or 8, **characterised in that** the data bus (68) is connected to the memory system (42) and to the linearization chip (41) with a buffer memory (74) connected in between.

10. Reading unit as claimed in one or more of claims 5 to 7, **characterised in that** an address bus (69) of the computer bus (66) is connected to the address port of the memory system (46) with another buffer memory (73) connected in between.

11. Reading unit as claimed in one or more of the preceding claims, **characterised in that** the control and/or evaluation unit (44) is provided in the form of a microprocessor (67) and a sequence controller (75).

12. Reading unit as claimed in one or more of the preceding claims, **characterised in that** the control and/or evaluation unit (44) is programmed to forward the read, corrected image data to a primary computer (62).

13. Reading unit as claimed in one or more of claims 6 to 12, **characterised in that** the control and/or evaluation unit (44), the temporary memory (59) and the correction system (39) are arranged on a printed board constituting the scanner electronics (65) for the reading unit (1), which is wired to the scanner device (25) via predefined interfaces.

14. Reading unit as claimed in one or more of the preceding claims, **characterised in that** an interface (61) between the control and/or evaluation unit (44) of the reading unit (1) and a primary computer (62) is a Centronics parallel interface or a USB interface.

15. Reading unit as claimed in claim 13, **characterised in that** the scanner device (25) is a stand-alone, modular unit, which is wired via a line connection, in particular a cable (118), to the scanner electronics (65).

16. Reading unit as claimed in one or more of the preceding claims, **characterised in that** the scanner device (25) has a scanner head (117), which extends across the region of the scanning zone transversely to the insertion and feed direction (arrow (7)) of the document (2).

17. Reading unit as claimed in claim 16, **characterised in that** the scanner head (117) has a retaining frame (120), in which at least one opto-electrical transformer (34), at least one light source (32, 33) and a lense arrangement (35) are mounted.

18. Reading unit as claimed in one or more of the preceding claims, **characterised in that** at least two light sources (32, 33) are provided as light emitters, which emit their light in the direction of a planar face (92, 93) of the document (2) to be scanned.

19. Reading unit as claimed in one or more of the preceding claims, **characterised in that** the opto-electrical transformer (34) is made up of a plurality of opto-electrical elements for transforming the light refracted from the respective planar face (92, 93) into the image signal (37) representing the light conditions at the opto-electrical transformer (34).

20. Reading unit as claimed in claim 17, **characterised in that** the lens arrangement (35) consists of a plurality of gradient lenses (36), arranged on a vertical line between the planar face (92, 93) to be optically scanned and the opto-electrical transformer (34) provided in the form of a CCD element, and the light refracted from a document (2) is reproduced on the individual opto-electrical elements thereof.

21. Reading unit as claimed in claim 17 or 18, **characterised in that** the light sources (32, 33), preferably provided in the form of strip-LEDs, are arranged before and after the opto-electrical transformer (34) in the insertion and feed direction (arrow (7)), so that the opto-electrical transformer (34) is arranged between at least two such strip-type light sources (32, 33).

22. Reading unit as claimed in claim 17, **characterised in that** the optical, electric and/or opto-electrical components of the scanner device (25) are sealed off from the ambient environment by means of a dust-proof transparent cover (121) on the retaining frame (120).

23. Reading unit as claimed in claim 22, **characterised in that** the transparent cover (121), preferably of glass, is in contact with the planar face (92, 93) of a document (2) being scanned during the scanning process.

24. Reading unit as claimed in claim 22 or 23, **characterised in that** a pressure mechanism (31), preferably a rotatably mounted pressure roller, presses a document (2) to be scanned completely and without gaps against a contact surface (30) of the cover (121).

25. Reading unit as claimed in claim 24, **characterised in that** a rotation axis of the pressure mechanism (31) provided in the form of a pressure roller and a mid-axis of the gradient lens (36) and/or the opto-electrical transformer (34) lie on a common vertical axis (122).

26. Reading unit as claimed in claim 25, **characterised in that** the rotation axis of the pressure mechanism (31) runs parallel with the longitudinal mid-axis of the lens arrangement (35) comprising a plurality of lenses and/or parallel with a mid-axis (90) of the opto-electronic transformer (34) provided as CCD arrays.

27. Reading unit as claimed in one or more of the preceding claims, **characterised in that** the scanner device (25), in particular the scanner head (117), is mounted by means of a bearing mechanism (123) so as to be displaceable in translation and/or rotation in the reading unit (1).

28. Reading unit as claimed in claim 27, **characterised in that** the bearing mechanism (123) is an articulated and/or guide mechanism (124), which rotates the scanner device (25) about a pivot axis (127) running parallel with the planar faces (92, 93) of the document (2).

29. Reading unit as claimed in claim 16 or 17, **characterised in that** the scanner head (117) is mounted in a vertical guide (129) so as to be displaceable perpendicular to the pivot axis (127).

30. Reading unit as claimed in one or more of the preceding claims, **characterised in that** the feed mechanism (17) has a plurality of electric motor-driven drive and/or transport rollers (18, 19), which guide and convey the document (2) along a guide track (6) provided inside the reading unit (1).

31. Reading unit as claimed in one or more of the preceding claims, **characterised in that** an alignment mechanism (89) is provided before the scanner device (25) in the insertion and feed direction (arrow (7)) to ensure that documents (2) fed in askew are uniformly straightened.

32. Reading unit as claimed in claim 31, **characterised in that** the alignment mechanism (89) has a transverse feed mechanism (96) for transversely conveying the documents (2) to be scanned as far as a contact surface (103) parallel with the standard insertion or feed direction (arrow (7)).

33. Reading unit as claimed in one or more of claims 17, 18 or 21, **characterised in that** the light sources (32, 33) are configured to emit white or a different light, preferably to emit red light, in order to fade out images of the corresponding colour on the document (2).

34. Reading unit as claimed in one or more of the preceding claims, **characterised in that** the control and/or evaluation unit (44) is wired to an output device (105) disposed in the reading unit (1).

35. Reading unit as claimed in claim 34, **characterised in that** the output device (105) is designed to apply characters permanently to the document (2) and is provided in the form of a printer unit (106) or a stamping unit (107).

36. Reading unit as claimed in one or more of the preceding claims, **characterised in that** it is used in a bank and/or a lottery terminal and has detection devices (8, 26) and/or locking and/or releasing mechanisms (10), in particular shutters (11), for documents (2).

## Revendications

1. Unité de lecture (1) pour un document (2) avec un dispositif de commande et/ou d'évaluation (44) et avec un dispositif à balayage (25) pour la lecture du document, avec un dispositif de guidage pour le document et avec un dispositif de transport (17) pour le déplacement relatif entre le document et le dispositif à balayage, où le dispositif de commande et/ou d'évaluation présente un dispositif d'égalisation (39) avec des valeurs de correction pour la correction des signaux d'image partant d'un convertisseur opto-électrique (34) du dispositif à balayage (25) en temps réel, et les valeurs de correction respectivement individuelles pour le convertisseur opto-électronique (34) sont déterminées au moins par une comparaison de valeurs de consigne d'un document de référence avec les valeurs réelles émises par le convertisseur opto-électrique des signaux d'image (37; 56) du document de référence et sont stockées d'une manière durable dans un premier dispositif formant mémoire (42), **caractérisée en ce que** le premier dispositif formant mémoire (42) pour les valeurs de correction est disposé directement à une tête de balayage (117) du dispositif à balayage (25) et/ou au convertisseur opto-électrique (34) et forme avec celui-ci un composant en une pièce avec des interfaces prédéfinies aux composants électroniques périphériques, notamment à une électronique à balayage (65) et **en ce que** le dispositif de commande et/ou d'évaluation (44), au moins à chaque phase d'accélération, est réalisé pour la transmission des données de correction du premier dispositif formant mémoire (42) non volatil dans un autre dispositif formant mémoire (46) du dispositif de commande et/ou d'évaluation (44), et **en ce que** ce dispositif formant mémoire ultérieure (46) présente une possibilité d'accès plus rapide en comparaison au premier dispositif formant mémoire (42) et une vitesse de transmission de données plus élevée.

2. Unité de lecture selon la revendication 1, **caractérisée en ce que** le dispositif d'égalisation (39) est réalisé pour la superposition du signal d'image (37) avec un signal de correction (54) correspondant aux valeurs de correction dans le dispositif formant mémoire ultérieure (46).

3. Unité de lecture selon la revendication 1 ou 2, **caractérisée en ce que** le dispositif d'égalisation (39) présente au moins une puce de linéarisation (41) qui est reliée par une ligne au dispositif formant mémoire ultérieure (46) pour les valeurs de correction et au dispositif à balayage (25) et est réalisée pour l'inclusion des valeurs de correction disponibles dans le signal d'image analogique (37) provenant du dispositif à balayage (25) de façon qu'un signal d'image corrigé (56) en résulte.

4. Unité de lecture selon la revendication 3, **caractérisée en ce que** les puces de linéarisation (41) du dispositif d'égalisation (39) émettent le signal d'image analogique corrigé (56), côté sortie, sous forme de données d'image numériques.

5. Unité de lecture selon la revendication 3 ou 4, **caractérisée en ce que** les puces de linéarisation (41) sont réalisées pour la transmission des données d'image numériques corrigées par un bus de calculateur (66) au dispositif de commande et/ou d'évaluation (44).

6. Unité de lecture selon la revendication 5, **caractérisée en ce que** les puces de linéarisation (41) sont réalisées pour la transmission des données d'image analogiques corrigées du document (2) par le bus de calculateur (66) à une mémoire intermédiaire (59) du dispositif de commande et/ou d'évaluation (44).

7. Unité de lecture selon la revendication 6, **caractérisée en ce que** la mémoire intermédiaire (59) est reliée par une ligne à un bus de données (68) du bus de calculateur (66) au dispositif de commande et/ou d'évaluation (44).

8. Unité de lecture selon la revendication 7, **caractérisée en ce que** la mémoire intermédiaire (59) pour les données d'image numériques corrigées, reliée par une ligne, par le bus de données (68) aux puces de linéarisation (41) et avec le dispositif de commande et/ou d'évaluation (44), est formée par plusieurs registres de décalage (60).

9. Unité de lecture selon la revendication 7 ou 8, **caractérisée en ce que** le bus de données (68), en intercalant une mémoire tampon (74), est relié au dispositif formant mémoire (42) et à la puce de linéarisation (41).

10. Unité de lecture selon l'une ou plusieurs des revendications 5 à 7, **caractérisée en ce qu'**un bus d'adresses (69) du bus de calculateur (66), en intercalant une mémoire tampon supplémentaire (73), est relié à l'accès d'adresses du dispositif formant mémoire (46).

11. Unité de lecture selon l'une ou plusieurs des revendications précédentes, **caractérisée en ce que** le dispositif de commande et/ou d'évaluation (44) est formé par un microprocesseur (67) et par un dispositif de contrôle de déroulement (75).

12. Unité de lecture selon l'une ou plusieurs des revendications précédentes, **caractérisée en ce que** le dispositif de commande et/ou d'évaluation (44) est réalisé pour la transmission des données d'image corrigées et lues à un calculateur subordonné (62).

13. Unité de lecture selon l'une ou plusieurs des revendications 6 à 12, **caractérisée en ce que** le dispositif de commande et/ou d'évaluation (44), la mémoire intermédiaire (59) et le dispositif d'égalisation (39) sont disposés sur une plaque d'impression formant l'électronique de balayage (65) pour l'unité de lecture (1), qui est reliée par une ligne, par des interfaces prédéfinies, au dispositif à balayage (25).

14. Unité de lecture selon l'une ou plusieurs des revendications précédentes, **caractérisée en ce qu'**une interface (61) entre le dispositif de commande et/ou d'évaluation (44) de l'unité de lecture (1) et un calculateur subordonné (62) est formée par une interface parallèle Centronics ou une interface à bande latérale supérieure.

15. Unité de lecture selon la revendication 13, **caractérisée en ce que** le dispositif à balayage (25) forme une unité de construction modulaire indépendante qui est relié d'une manière conductrice par au moins une liaison à ligne, notamment par un câble (118) à l'électronique à balayage (65).

16. Unité de lecture selon l'une ou plusieurs des revendications précédentes, **caractérisée en ce que** le dispositif à balayage (25) est réalisé comme tête de balayage (117) qui s'étend transversalement à la direction d'amenée, respectivement de transport (flèche (7) )du document (2) sur l'étendue de la zone de balayage.

17. Unité de lecture selon la revendication 16, **caractérisée en ce que** la tête de balayage (117) présente un cadre de réception (120) qui retient au moins un convertisseur opto-électrique (34), au moins une source de lumière (32, 33) et un agencement de lentilles (35).

18. Unité de lecture selon l'une ou plusieurs des revendications précédentes, **caractérisée en ce que** sont disposées au moins deux sources de lumière (32, 33) réalisées sous forme de baguettes lumineuses qui font rayonner leur lumière en direction d'un côté plat à balayer (92, 93) du document (2).

19. Unité de lecture selon l'une ou plusieurs des revendications précédentes, **caractérisée en ce que** le convertisseur opto-électrique (34) est réalisé avec plusieurs éléments opto-électriques pour la transformation de la lumière réfractée par le côté plat respectif (92, 93) en signal d'image (37) représentant les rapports de lumière au convertisseur opto-électrique (34).

20. Unité de lecture selon la revendication 17, **caractérisée en ce que** l'agencement de lentilles (35) est formé par plusieurs lentilles à gradient (36) qui, relativement à une direction verticale, est disposé entre le côté plat (92, 93) à balayer optiquement et le convertisseur opto-électrique (34) réalisé sous forme d'élément CCD et qui représente la lumière réfractée par un document (2) sur les éléments opto-électriques individuels de celui-ci.

21. Unité de lecture selon la revendication 17 ou 18, **caractérisée en ce que** les sources de lumière (32, 33) réalisées de préférence comme baguettes à diode luminescente, relativement à la direction d'amenée, respectivement de transport (flèche (7)), sont disposées en amont et en aval du convertisseur opto-électrique (34) de telle sorte que le convertisseur opto-électrique (34) est disposé au moins entre deux de ces sources de lumière (32, 33) en forme de baguette.

22. Unité de lecture selon la revendication 17, **caractérisé en ce que** les composants optiques, électriques et/ou opto-électriques du dispositif à balayage (25) sont fermés par une plaque de recouvrement transparente (121) sur le cadre de réception (120) d'une manière étanche à la poussière de la zone environnante.

23. Unité de lecture selon la revendication 22, **caractérisée en ce que** la plaque de recouvrement transparente (121) réalisée de préférence en verre peut être mise en contact pendant l'opération de balayage avec le côté plat à balayer (92, 93) d'un document (2).

24. Unité de lecture selon la revendication 22 ou 23, **caractérisée en ce qu'**un dispositif d'application (31) qui est réalisé de préférence sous forme de rouleau logé d'une manière rotative, applique un document à entrer (2) sans espace et entièrement contre une face d'application (30) de la plaque de recouvrement (121).

25. Unité de lecture selon la revendication 24, **caractérisée en ce qu'**un axe de rotation du dispositif d'application (31) réalisé sous forme de rouleau d'application et un axe médian de la lentille à gradient (36) et/ou du convertisseur opto-électrique (34) se situe sur un axe vertical commun (122).

26. Unité de lecture selon la revendication 25, **caractérisée en ce que** l'axe de rotation du dispositif d'application (31) s'étend parallèlement à l'axe médian longitudinal de l'agencement de lentilles (35) constitué de plusieurs lentilles et/ou parallèlement à un axe médian (90) du convertisseur opto-électronique (34) réalisé comme CCD en lignes.

27. Unité de lecture selon l'une ou plusieurs des revendications précédentes, **caractérisée en ce que** le dispositif à balayage (25), notamment la tête de balayage, (117) est logé par un dispositif de palier (123) à translation et/ou à rotation dans l'unité de lecture (1).

28. Unité de lecture selon la revendication 27, **caractérisée en ce que** le dispositif de palier (123) forme un dispositif d'articulation et/ou de guidage (124) qui loge le dispositif à balayage (25) à rotation autour d'un axe de pivotement (127) s'étendant parallèlement aux côtés plats (92, 93) du document (2).

29. Unité de lecture selon la revendication 16 ou 17, **caractérisée en ce que** la tête de balayage (117) est logée d'une manière déplaçable dans un guidage vertical (129) perpendiculairement à l'axe de pivotement (127).

30. Unité de lecture selon l'une ou plusieurs des revendications précédentes, **caractérisée en ce que** le dispositif de transport (17) présente plusieurs rouleaux d'entraînement et/ou de transport (18, 19) pouvant être entraînés par un moteur électrique qui guident et transportent un document (2) le long d'une voie de guidage prévue (6) à l'intérieur de l'unité de lecture (1).

31. Unité de lecture selon l'une ou plusieurs des revendications précédentes, **caractérisée en ce qu'**il est disposé, relativement à la direction d'amenée ou de transport (flèche (7)) en amont du dispositif à balayage (25) un dispositif d'orientation (89) pour établir une orientation uniforme de documents (2) arrivant selon un angle oblique.

32. Unité de lecture selon la revendication 31, **caractérisée en ce que** le dispositif d'orientation (89) présente un dispositif de convoyage transversal (96) pour le convoyage transversal des documents à entrer (2) jusqu'à une face de butée (103) orientée parallèlement à la direction d'amenée ou de transport usuelle (flèche (7)).

33. Unité de lecture selon l'une ou plusieurs des revendications 17, 18 ou 21, **caractérisée en ce que** les sources de lumière (32, 33) sont réalisées pour le rayonnement d'une lumière blanche ou d'une lumière différente de celle-ci, de préférence pour le rayonnement d'une lumière rouge pour supprimer des représentations d'une couleur correspondante sur le document (2).

34. Unité de lecture selon l'une ou plusieurs des revendications précédentes, **caractérisée en ce que** le dispositif de commande et/ou d'évaluation (44) est relié par une ligne à un dispositif d'émission (105) disposé dans l'unité de lecture (1).

35. Unité de lecture selon la revendication 34, **caractérisée en ce que** le dispositif d'émission (105) est réalisé pour l'application durable de signes sur le document (2) et est formé par une unité d'impression (106) ou une unité à tampons (107).

36. Unité de lecture selon l'une ou plusieurs des revendications précédentes, **caractérisée en ce qu'**elle est utilisée dans un terminal de banque et/ou de loterie et présente des installations de détection (8, 26) et/ou des dispositifs de blocage et/ou de libération (10), notamment des volets (11) pour des documents (2).
